# EUROPEAN PATENT APPLICATION

(11) **EP 4 723 655 A1**
(43) Date of publication of application: **08.04.2026**
(21) Application number: 25751645.0
(22) Date of filing: 07.02.2025
(51) Int. Cl.: H04N 23/55

(54) **CAMERA MODULE AND ELECTRONIC DEVICE**

(30) Priority: 08.02.2024 CN 202410178069; 23.02.2024 CN 202410206276
(71) Applicant: Huawei Technologies Co., Ltd., Shenzhen, Guangdong 518129 (CN)
(72) Inventor: SUN, Jiguang, Shenzhen, Guangdong 518129 (CN); ZHAO, Zijie, Shenzhen, Guangdong 518129 (CN); ZHONG, Ding, Shenzhen, Guangdong 518129 (CN); KUO, Li-Te, Shenzhen, Guangdong 518129 (CN); DING, Ruiming, Shenzhen, Guangdong 518129 (CN); LIAO, Li, Shenzhen, Guangdong 518129 (CN); FAN, Wen, Shenzhen, Guangdong 518129 (CN)
(74) Representative: MERH-IP Matias Erny Reichl Hoffmann Patentanwälte PartG mbB
(86) International application number: PCT/CN2025/076177
(87) International publication number: WO 2025/168046

(57) **Abstract**

Embodiments of this application provide a camera module and an electronic device. A light shielding member, a front-end optical device, and a drive apparatus are disposed in the camera module, so that the drive apparatus drives the light shielding member and the front-end optical device to be reversely linked. Two optical paths, namely, first external light and second external light, may be implemented in one camera module, so that the camera apparatus implements shooting with a plurality of focal length ranges while using a set of back-end imaging devices, to provide a larger zoom ratio, thereby improving an imaging effect. The imaging effect is improved by moving the front-end optical device and sharing the back-end imaging device, instead of newly adding a camera lens or a camera module. Therefore, product space and costs can be reduced.

## Description

This application claims priorities to Chinese Patent Application No. 202410178069.7, filed with the China National Intellectual Property Administration on February 08, 2024 and entitled "CAMERA MODULE AND ELECTRONIC DEVICE", and to Chinese Patent Application No. 202410206276.9, filed with the China National Intellectual Property Administration on February 23, 2024 and entitled "CAMERA MODULE AND ELECTRONIC DEVICE", both of which are incorporated herein by reference in their entireties.

### TECHNICAL FIELD

This application relates to the field of camera technologies, and in particular, to a camera module and an electronic device.

### BACKGROUND

To implement shooting in more scenes and with a plurality of focal length ranges, a conventional mobile phone is usually equipped with a plurality of cameras with different features. Simple stacking of the cameras occupies large product space, increasing costs.

### SUMMARY

Embodiments of this application provide a camera module and an electronic device, to implement shooting in a plurality of scenes and with a plurality of focal length ranges without newly adding a camera lens or a camera module, so that product space and costs can be reduced.

According to a first aspect, an embodiment of this application provides a camera module, where the camera module has a first light-taking region and a second light-taking region, and the camera module includes a light shielding member, a front-end optical device, a drive apparatus, and a back-end imaging device; the drive apparatus is configured to drive the light shielding member and the front-end optical device to move between the first light-taking region and the second light-taking region, and enable the light shielding member and the front-end optical device to move in opposite directions, and when the light shielding member reaches the first light-taking region, the front-end optical device reaches the second light-taking region, where the light shielding member is configured to block first external light that passes through the first light-taking region from being emitted to the back-end imaging device, and the front-end optical device is configured to enable second external light that passes through the second light-taking region to be emitted to the back-end imaging device; when the light shielding member reaches the second light-taking region, the front-end optical device reaches the first light-taking region, where the light shielding member is configured to block the second external light that passes through the second light-taking region from being emitted to the back-end imaging device, and the front-end optical device is configured to enable the first external light that passes through the first light-taking region to be emitted to the back-end imaging device; and the back-end imaging device is configured to perform imaging processing on the first external light or the second external light.

In this embodiment of this application, the light shielding member, the front-end optical device, and the drive apparatus are disposed, so that the drive apparatus drives the light shielding member and the front-end optical device to be reversely linked. Two optical paths, namely, first external light and second external light, may be implemented in one camera module, so that the camera apparatus implements shooting with a plurality of focal length ranges on a premise of using a set of back-end imaging devices, to provide a larger zoom ratio, thereby improving an imaging effect. The imaging effect is improved by moving the front-end optical device and sharing the back-end imaging device, instead of newly adding a camera lens or a camera module. Therefore, product space and costs can be reduced.

In an implementation of the first aspect, the camera module further includes a first transparent portion and a second transparent portion, the first transparent portion is disposed in the first light-taking region and is used for transmission of first external light, and the second transparent portion is disposed in the second light-taking region and is used for transmission of the second external light. Both the front-end optical device and the back-end imaging device are located on a light exit side of the first transparent portion and the second transparent portion. In this solution, the first transparent portion and the second transparent portion may package an internal structure of the camera module, to ensure structural performance and optical performance of the camera module.

In an implementation of the first aspect, the light shielding member is located on the light outlet sides of the first transparent portion and the second transparent portion, or the light shielding member is located on a light entrance side of the first transparent portion and the second transparent portion. In this solution, the light shielding member may be disposed on the light exit side or the light entrance side of the first transparent portion as required, that is, disposed on an inner side or an outer side of the first transparent portion, so that both a light shielding effect of the light shielding member and reverse linkage between the light shielding member and the front-end optical device can be implemented.

In an implementation of the first aspect, at least one of the first transparent portion and the second transparent portion includes an optical lens, and the optical lens is configured to perform optical processing on external light. The first transparent portion and/or the second transparent portion include/includes an optical lens, so that shooting with a plurality of focal length ranges can be implemented, to provide a larger zoom ratio, and further, multi-functional shooting can be implemented, to achieve "multi-camera integration", thereby improving an imaging effect.

In an implementation of the first aspect, the first transparent portion and the second transparent portion each include an optical lens, and a focal length of the first transparent portion is different from a focal length of the second transparent portion. Shooting with a plurality of focal length ranges can be implemented, to provide a larger zoom ratio, and further, multi-functional shooting can be implemented, to implement "multi-camera integration", thereby improving an imaging effect. The multi-functional shooting includes but is not limited to at least one of a primary camera, a long-focus lens, a wide-angle lens, a macro lens, a depth of field, and the like.

In an implementation of the first aspect, the drive apparatus includes a drive source and a transmission mechanism, the drive source is connected to the transmission mechanism, and the drive source is configured to drive the transmission mechanism to generate mechanism motion; and the transmission mechanism connects the light shielding member and the front-end optical device, and the transmission mechanism is configured to transfer motion to the light shielding member and the front-end optical device. The drive apparatus is disposed, to accurately and reliably drive the light shielding member and the front-end optical device to be reversely linked.

In an implementation of the first aspect, the drive apparatus includes a drive source and a transmission mechanism, where the drive source is configured to drive the front-end optical device to move, and the transmission mechanism connects the light shielding member and the front-end optical device; and the front-end optical device is configured to transfer motion to the light shielding member through the transmission mechanism. The drive apparatus is disposed, to accurately and reliably drive the light shielding member and the front-end optical device to be reversely linked. Driving can be further implemented by using an existing structural layout in the camera module, thereby reducing occupation of structural space.

In an implementation of the first aspect, the drive source includes a voice coil motor, the voice coil motor includes a magnet and a coil, the magnet is fastened in the camera module, and the coil is fastened to the front-end optical device. The voice coil motor is used as a drive source, so that driving can be implemented by using an existing structural layout in the camera module, thereby reducing occupation of structural space.

In an implementation of the first aspect, the transmission mechanism includes a first rack, a gear, and a second rack; the first rack is connected to the light shielding member, and the second rack is connected to the front-end optical device; and the gear is located between the first rack and the second rack, and is meshed with both the first rack and the second rack. The transmission mechanism is rigid transmission, and has high transmission efficiency, so that push force that needs to be provided by the drive source is small, motion precision of the light shielding member is high, and anti-drop performance of the camera module is good. A manufacturing process of the transmission mechanism is mature, assembly is simple, facilitating mass production.

In an implementation of the first aspect, the gear is disposed in a housing of the camera module, and is rotatably connected to the housing. Assembly of the transmission mechanism in this solution is simple, facilitating mass production. In an implementation of the first aspect, the transmission mechanism includes two transmission wheels and a rope; the two transmission wheels are spaced apart in the camera module; and the rope is wound around peripheries of the two transmission wheels, the rope is fastened to the light shielding member and the front-end optical device respectively on two opposite sides in a radial direction of the transmission wheel, and the rope is configured to move relative to the two transmission wheels. The transmission mechanism is flexible transmission, occupies small space, has small operating noise, may have buffering and vibration absorption performance, and has a small weight.

In an implementation of the first aspect, the two transmission wheels are configured to rotate. The transmission wheel rotates, so that rolling friction can be formed between the rope and the transmission wheel, transmission resistance and operating noise can be reduced, and transmission efficiency can be increased, thereby helping ensure reliability and a service life of the transmission mechanism.

In an implementation of the first aspect, the light shielding member or the front-end optical device includes an accommodating housing, a fastening block, and a spring, both the fastening block and the spring are accommodated in the accommodating housing, the fastening block is configured to move in the accommodating housing, and two opposite ends of the spring respectively abut against an inner wall of the accommodating housing and the fastening block; and a portion that is of the rope and that is located between the two transmission wheels is disconnected to form a gap, two opposite ends of the disconnection of the rope are both located in the accommodating housing, the spring is sleeved on a periphery of one of the two opposite ends, and the fastening block is fastened to the end. The rope is disconnected, an elastic member is mounted at the disconnection, and the fastening block is movable. In this way, when the camera module is greatly impacted (for example, in a scene such as falling or collision), impact force may drive the fastening block to slide, thereby reducing or avoiding a risk that the rope is broken due to excessively strong impact force. When the impact disappears, the elastic member may restore elastic deformation, and the fastening block is pushed back to a default position. In addition, the elastic member may alternatively provide some functions of buffering and vibration absorption.

In an implementation of the first aspect, the transmission mechanism includes an elastic member and a rotating shaft; and the rotating shaft is fastened in the camera module; and
the elastic member is rotatably connected to the rotating shaft, and connects the light shielding member and the front-end optical device; and the elastic member is configured to rotate around the rotating shaft to generate elastic deformation. The transmission mechanism occupies small space, has small operating noise, may have buffering and vibration absorption performance, and has a small weight.

In an implementation of the first aspect, the light shielding member and the front-end optical device each are provided with a sliding pin; the transmission mechanism includes a connecting rod and a rotating shaft; the rotating shaft is fastened in the camera module; and the connecting rod is rotatably connected to the rotating shaft; the connecting rod is provided with two sliding slots, where one of the sliding slots forms sliding cooperation with the sliding pin of the light shielding member, and the other sliding slot forms sliding cooperation with the sliding pin of the front-end optical device; and the connecting rod is configured to rotate around the rotating shaft under driving of the front-end optical device, and each sliding pin is configured to slide in the corresponding sliding slot. The structure of the transmission mechanism is simple, and transmission efficiency and reliability can meet a product requirement.

In an implementation of the first aspect, the light shielding member includes a first side and a second side, the first side and the second side are disposed opposite to each other, the first side is configured to receive external light, and a plurality of sawteeth whose cross-sectional shapes are triangles are disposed on the second side. The sawtooth is disposed at the bottom of the light shielding member, so that stray light that is refracted by the front-end optical device to the bottom of the light shielding member and then reflected by the bottom of the light shielding member to the back-end imaging device can be eliminated, thereby reducing impact of stray light on imaging quality.

In an implementation of the first aspect, the camera module further includes a light shielding curtain, where the light shielding curtain is configured to: when the light shielding member reaches the first light-taking region, block external light entering from a gap between the light shielding member and the front-end optical device. The light shielding curtain is disposed, so that external stray light entering from the gap between the light shielding member and the front-end optical device can be blocked, thereby reducing impact of stray light on imaging quality.

In an implementation of the first aspect, the light shielding curtain includes a fastened part and a cantilever part that are connected, the fastened part is fastened to an edge of the light shielding member, a gap exists between the cantilever part and the light shielding member, the cantilever part is bent relative to the fastened part, and the cantilever part can generate elastic deformation; and when the light shielding member reaches the first light-taking region, the light shielding curtain is located on a side that is of the light shielding member and that is close to the front-end optical device, the cantilever part is located between the light shielding member and the front-end optical device, and the cantilever part is configured to block external light entering from the gap between the light shielding member and the front-end optical device. This solution in simple in structure and has good mass production.

In an implementation of the first aspect, the camera module further includes a torsion spring, both the light shielding curtain and the torsion spring are disposed on an edge of the light shielding member, and the light shielding curtain is rotatably connected to the light shielding member through the torsion spring; and when the light shielding member reaches the first light-taking region, the light shielding curtain is located between the light shielding member and the front-end optical device. This solution has a simple structure and can meet a product requirement.

In an implementation of the first aspect, the camera module further includes a torsion spring; the light shielding curtain includes a pin shaft and a light shielding part that are connected, and the pin shaft is drivably disposed in the camera module; when the light shielding member reaches the first light-taking region, the light shielding part is located between the light shielding member and the front-end optical device, and the light shielding part is configured to block external light entering from the gap between the light shielding member and the front-end optical device; and the light shielding part is further configured to be pushed by the light shielding member and the front-end optical device during motion of the light shielding member and the front-end optical device, to rotate around the pin shaft. The torsion spring is mounted on the pin shaft, and the torsion spring is configured to provide elastic restoring force for the pin shaft. This solution is simple in structure and is reliable, and can meet a product requirement.

In an implementation of the first aspect, the front-end optical device includes a prism or a reflector. The prism or the reflector may process external light, thereby helping implement a corresponding optical path and ensuring an imaging effect.

In an implementation of the first aspect, the camera module is a periscope-type camera module, and the front-end optical device is configured to deflect external light to the back-end imaging device. The solution in this embodiment of this application is applied to the periscope-type camera module, so that the periscope-type camera module can extend more focal length ranges without further increasing a volume, to increase a zoom ratio, and increase a shooting function, to implement "multi-camera integration", thereby improving an imaging effect.

According to a second aspect, an embodiment of this application provides an electronic device, including a transparent portion and any one of the foregoing camera modules, where the camera module is located on a light exit side of the transparent portion. A light shielding member, a front-end optical device, and a drive apparatus are disposed in the camera module of the electronic device, so that the drive apparatus drives the light shielding member and the front-end optical device to be reversely linked. Two optical paths, namely, first external light and second external light, may be implemented in one camera module, so that the camera apparatus implements shooting with a plurality of focal length ranges on a premise of using a set of back-end imaging devices, to provide a larger zoom ratio, thereby improving an imaging effect. The imaging effect is improved by moving the front-end optical device and sharing the back-end imaging device, instead of newly adding a camera lens or a camera module. Therefore, product space and costs can be reduced.

In an implementation of the second aspect, the electronic device includes a housing, the transparent portion is mounted on the housing, and the camera module is located in the housing. For example, the housing may be a rear housing, and the transparent portion is disposed on the rear housing, so that the camera module may be a rear-facing camera module.

### BRIEF DESCRIPTION OF DRAWINGS

FIG. 1 is a diagram of a plane structure of an electronic device according to an embodiment of this application;
FIG. 2(a) and FIG. 2(b) show schematic framework structures and working principles of a camera module according to an embodiment of this application;
FIG. 3(a) and FIG. 3(b) show schematic framework structures and working principles of a camera module according to an embodiment of this application;
FIG. 4(a) and FIG. 4(b) show schematic framework structures and working principles of a camera module according to an embodiment of this application;
FIG. 5 is a diagram of an assembly structure of a camera module according to an embodiment of this application;
FIG. 6 is a diagram of an exploded structure of the structure shown in FIG. 5;
FIG. 7 is a diagram of a B-B cross-sectional structure of a partial structure in FIG. 6;
FIG. 8 is a diagram of a structure of a light shielding member in FIG. 6 from a perspective;
FIG. 9 is a diagram of a structure of a light shielding member in FIG. 6 from another perspective;
FIG. 10 is a diagram of a structure of a front-end optical device in FIG. 6;
FIG. 11 is a diagram of an exploded structure of the structure shown in FIG. 10;
FIG. 12 is a diagram of an assembly structure in which a light shielding member is connected to a front-end optical device through a transmission mechanism according to an embodiment;
FIG. 13 is a diagram of an E-E cross-sectional structure of the structure shown in FIG. 5;
FIG. 14 is a diagram of another E-E cross-sectional structure of the structure shown in FIG. 5;
FIG. 15 is a diagram of a transmission path of stray light when a front-end optical device moves to a side of a second transparent portion and a light shielding member moves to a side of a first transparent portion;
FIG. 16 is a diagram of a structure of a sawtooth array on a light shielding member according to an embodiment;
FIG. 17 is a diagram of a D-D cross-sectional structure of the structure shown in FIG. 16;
FIG. 18 is a diagram of a partial structure of a light shielding member in FIG. 17;
FIG. 19(a) to FIG. 19(e) respectively show different cross-sectional triangles of sawteeth reflecting stray light;
FIG. 20 is a diagram of a transmission path of stray light when a front-end optical device moves to a side of a second transparent portion and a light shielding member moves to a side of a first transparent portion;
FIG. 21 is a diagram of a structure in a direction C in FIG. 8;
FIG. 22 shows a position of a cantilever part of a light shielding curtain relative to a front-end optical device when a light shielding member moves to a side of a first transparent portion;
FIG. 23, FIG. 24, and FIG. 25 show a structure of a transmission wheel-rope transmission mechanism according to an embodiment;
FIG. 26, FIG. 27, and FIG. 28 show a fastening housing, an elastic member, a fastening block, a fastening block, an elastic member, and a bottom plate in a front-end optical device;
FIG. 29 and FIG. 30 show a structure in which a light shielding member is connected to a front-end optical device through a torsion spring transmission mechanism according to an embodiment;
FIG. 31 and FIG. 32 show a structure in which a light shielding member is connected to a front-end optical device through a connecting rod mechanism according to an embodiment;
FIG. 33 shows a structure in which a light shielding member is rotatably connected to a light shielding curtain through a torsion spring according to an embodiment;
FIG. 34, FIG. 35, and FIG. 36 show a structure for blocking stray light according to an embodiment; and
FIG. 37 is a diagram of an F-F cross-sectional structure of the structure shown in FIG. 34.

### DESCRIPTION OF EMBODIMENTS

For ease of understanding, the following first explains and describes English abbreviations and related technical terms used in embodiments of this application.

Object-side surface: When a lens is used as a boundary, a side on which an object for shooting is located is an object side, and a surface that is of the lens and that is close to the object side is referred to as the object-side surface.

Image-side surface: When a lens is used as a boundary, a side on which an image of an object for shooting is located is an image side, and a surface that is of the lens and that is close to the image side is referred to as the image-side surface.

F-number: The f-number is a relative value (a reciprocal of a relative aperture) obtained by dividing a focal length of a camera lens by an entrance pupil diameter of the lens. A smaller f-number leads to a larger aperture and a larger quantity of incoming light in a same unit time. A larger f-number leads to a smaller aperture and a smaller depth of field. Background content of a photo is blurred, and this is similar to an effect of a long-focus camera lens.

An optical axis is an axis that runs vertically through the center of a lens. An optical axis of a camera lens is an axis that passes through centers of lenses of the camera lens. When light parallel to the optical axis enter a convex lens, an ideal convex lens converges all light at one point behind the lens. This point at which all the light converges is a focal point.

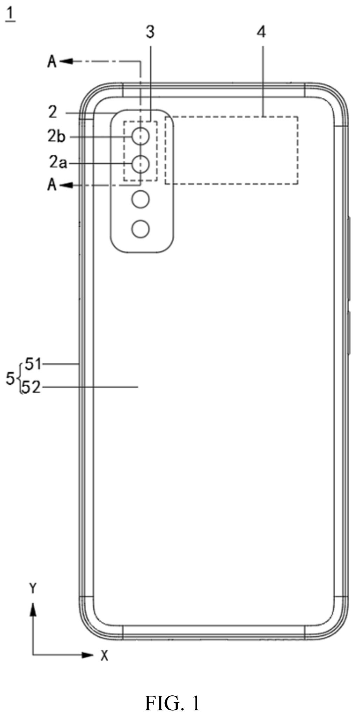

FIG. 1 is a diagram of a structure of an electronic device 1 according to an embodiment of this application. The electronic device 1 includes but is not limited to a device having a camera function, such as a mobile phone, a tablet computer, a laptop computer (laptop computer), a personal digital assistant (personal digital assistant, PDA), a camera, a personal computer, a notebook computer, an in-vehicle device, a wearable device, augmented reality (augmented reality, AR) glasses, an AR helmet, virtual reality (virtual reality, VR) glasses, and a VR helmet.

As shown in FIG. 1, the electronic device 1 may include a transparent portion 2, a camera module 3, a circuit board 4, a housing 5, and the like. It should be noted that FIG. 1 and the following related accompanying drawings schematically show only some components in the electronic device 1. Actual shapes, actual sizes, actual positions, and actual structures of the components are not limited to those in FIG. 1 and the following accompanying drawings. In addition, because the circuit board 4 and the camera module 3 are internal structures of the electronic device 1, FIG. 1 schematically shows the circuit board 4 and the camera module 3 by using dashed lines.

As shown in FIG. 1, for ease of description, a width direction of the electronic device 1 may be defined as an X-axis, and a length direction of the electronic device 1 may be defined as a Y-axis. A thickness direction of the electronic device 1 is a Z-axis. It may be understood that a coordinate system of the electronic device 1 may be flexibly set according to a specific actual requirement, and is not limited to the foregoing descriptions.

As shown in FIG. 1, for example, the housing 5 may include a frame 51 and a rear cover 52. The rear cover 52 and a screen are respectively fastened to two sides of the frame 51. The screen, the frame 51, and the rear cover 52 may jointly enclose internal space of the electronic device 1. An interior of the electronic device 1 may be used for accommodate a device of the electronic device 1, such as a battery, a receiver, or a microphone.

As shown in FIG. 1, the circuit board 4 is mounted inside the electronic device 1. A chip such as a central processing unit (central processing unit, CPU), a graphics processing unit (graphics processing unit, GPU), or a universal flash storage (universal flash storage, UFS) may be disposed on the circuit board 4.

As shown in FIG. 1, the camera module 3 is disposed inside the electronic device 1. The camera module 3 is configured to collect light outside the electronic device 1. For example, the camera module 3 may have a plurality of light-taking regions, and external light may be collected by the camera module 3 through the light-taking region. In an embodiment, the light-taking region may be a region in which a hole is provided on a module housing of the camera module 3, or a hole is provided on a module housing to form the light-taking region. In another embodiment, a transparent component may alternatively be mounted in the hole, and the light-taking region is the transparent component, or a transparent component is disposed in the light-taking region. The transparent component may be, for example, a transparent material such as glass or plastic, or an optical lens that can process light, for example, a lens. The camera module 3 may be electrically connected to the circuit board 4, and a signal may be mutually transmitted between the camera module 3 and the circuit board 4. It may be understood that the camera module 3 may be a rear-facing camera module, or may be a front-facing camera module.

For example, a transparent portion 2 is disposed on the rear cover 52. For example, the transparent portion 2 may be fastened on the rear cover 52. A material of the transparent portion 2 may be a transparent material, such as glass or plastic. In this way, light outside the electronic device 1 can pass through the transparent portion 2 to enter the electronic device 1, and is collected by the camera module 3. A side that is of the transparent portion 2 and that faces the outside may be referred to as a light entrance side, and external light enters the transparent portion 2 from the light entrance side. A side that is of the transparent portion 2 and that faces the inside may be referred to as a light exit side, and external light exits the light exit side and enters the camera module 3. A structure of the transparent portion 2 is not limited in this embodiment of this application. For example, an assembly structure such as a decoration member or a cover may be used.

In this embodiment of this application, the electronic device 1 may further include a screen, and the screen is configured to display an image. The screen may be a flat screen or a curved screen. The screen may be an organic light-emitting diode (organic light-emitting diode, OLED) display screen, an active-matrix organic light-emitting diode display screen, an active-matrix organic light-emitting diode (active-matrix organic light-emitting diode, AMOLED) display screen, a liquid crystal display (liquid crystal display, LCD), or the like. In an embodiment, the transparent portion 2 may alternatively belong to a screen. For example, the transparent portion 2 is a part of a cover of the screen. The camera module 3 in this embodiment is a front-facing camera module.

In another embodiment, when the electronic device 1 is a device in another form, the electronic device 1 may not include the screen.

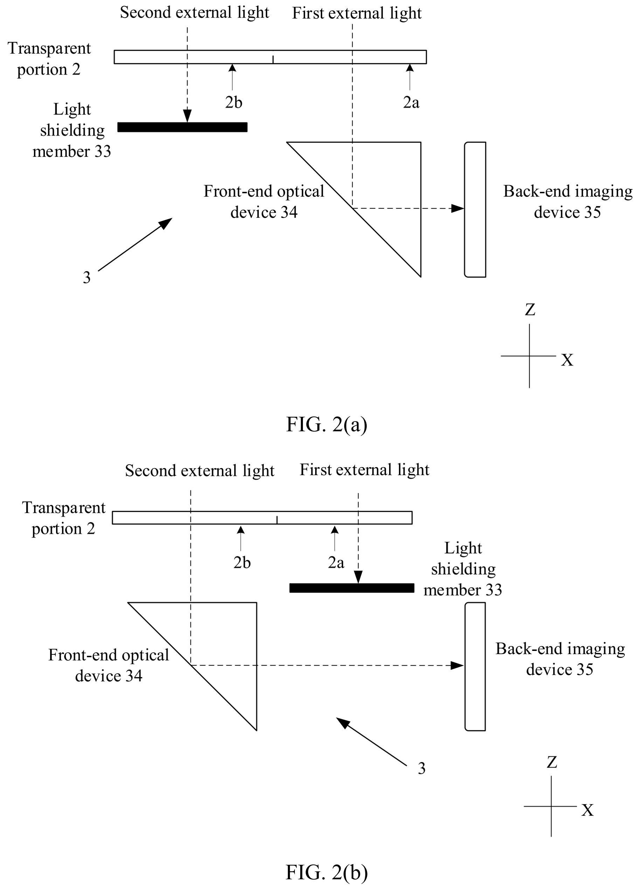

FIG. 2(a) shows a schematic framework structure and a working principle of a camera module 3 according to an embodiment of this application. A viewing plane in FIG. 2(a) may be an A-A cross-section in FIG. 1.

As shown in FIG. 2(a), for example, the camera module 3 may be located below the transparent portion 2 of the electronic device 1, that is, located on the light exit side of the transparent portion 2. The transparent portion 2 may include a plurality of transparent regions. Every two adjacent transparent regions may be separated by a black non-transparent region; or may be directly connected without disposing a black non-transparent region. For ease of description, external light rays that pass through different transparent regions may be distinguished. For example, FIG. 2(a) shows first external light that passes through a first transparent region 2a and second external light that passes through the second transparent region 2b.

In this embodiment, both the first light-taking region and the second light-taking region of the camera module 3 may be formed by holes on the module housing of the camera module 3. The first light-taking region corresponds to the first transparent region 2a, and the second light-taking region of the camera module 3 corresponds to the second transparent region 2b. Herein, "correspond" means that the two overlap, including complete overlap or only partial overlap. For example, that the first light-taking region corresponds to the first transparent region 2a may be that the first light-taking region completely overlaps or partially overlaps the first transparent region 2a. In the case of complete overlap, an area of the first light-taking region may be consistent with an area of the first transparent region 2a. In the case of partial overlap, an area of the first light-taking region may be less than or equal to an area of the first transparent region 2a, or may be greater than or equal to an area of the first transparent region 2a. As shown in FIG. 2(a), the camera module 3 may include a light shielding member 33, a front-end optical device 34, a drive apparatus (not shown in FIG. 2(a)), a back-end imaging device 35, and the like.

The light shielding member 33 has non-transparency, and a structure and a material of the light shielding member 33 may be designed as required. This is not limited in this embodiment of this application.

The front-end optical device 34 may include at least one optical lens, and may further include a component that has a mechanical function such as fastening, connecting, supporting, limiting, and/or protecting. The front-end optical device 34 is configured to receive the first external light or the second external light, and process the external light. For example, the front-end optical device 34 may be a reflector or a prism.

As shown in FIG. 2(a), the back-end imaging device 35 may be located on a light exit side of the front-end optical device 34. The back-end imaging device 35 may include at least one optical lens, such as an automatic focus (automatic focus, AF) lens and/or a prism. In some embodiments, the back-end imaging device 35 may further include a component that has a mechanical function such as fastening, connecting, supporting, limiting, and/or protecting the optical lens. The back-end imaging device 35 may further include an image sensor. The back-end imaging device 35 may receive external light from the front-end optical device 34, and implement optical imaging. In some embodiments, the back-end imaging device 35 may further implement a stabilization function.

In this embodiment of this application, both the light shielding member 33 and the front-end optical device 34 may be connected to the drive apparatus. The drive apparatus is configured to drive the light shielding member 33 and the front-end optical device 34 to move between the first light-taking region and the second light-taking region, or to move between the first transparent region 2a and the second transparent region 2b (for ease of description with reference to the accompanying drawings, that the light shielding member 33 and the front-end optical device 34 move between the first transparent region 2a and the second transparent region 2b is used for description below). That is, the drive apparatus may drive the light shielding member 33 to move between the first transparent region 2a and the second transparent region 2b, or may drive the front-end optical device 34 to move between the first transparent region 2a and the second transparent region 2b. The drive apparatus may drive the light shielding member 33 and the front-end optical device 34 to move simultaneously or basically simultaneously, and enable the light shielding member 33 and the front-end optical device 34 to move in opposite directions. Such a motion manner may be referred to as "reverse linkage".

In an embodiment, the light shielding member 33 and the front-end optical device 34 may share a drive apparatus to implement reverse linkage. In another embodiment, two drive apparatuses may respectively drive the light shielding member 33 and the front-end optical device 34 to implement reverse linkage. The two drive apparatuses may be completely separated, and there is no shared component between the drive apparatus for driving the light shielding member 33 and the drive apparatus for driving the front-end optical device 34. Alternatively, there is a common component between the drive apparatus for driving the light shielding member 33 and the drive apparatus for driving the front-end optical device 34. The common component may be configured to drive both the light shielding member 33 and the front-end optical device 34. The following is described still by using an example in which the light shielding member 33 and the front-end optical device 34 share a drive apparatus to implement reverse linkage.

FIG. 2(a) and FIG. 2(b) respectively indicate states of the light shielding member 33 and the front-end optical device 34 at different positions. For example, if a state shown in FIG. 2(a) is a default state, in the default state, the light shielding member 33 reaches a position corresponding to the second transparent region 2b, for example, reaches a limit position aligned with the second transparent region 2b, and the light shielding member 33 is located on a transmission path of the second external light passing through the second transparent region 2b. The front-end optical device 34 reaches a position corresponding to the first transparent region 2a, for example, reaches a limit position aligned with the first transparent region 2a, and the front-end optical device 34 is located on a transmission path of the first external light passing through the first transparent region 2a.

Herein, "aligned" means that the two overlap, including complete overlap or only partial overlap. For example, that the light shielding member 33 is aligned with the second transparent region 2b may be that the light shielding member 33 completely overlaps or partially overlaps the second transparent region 2b. In the case of complete overlap, an area of the light shielding member 33 may be consistent with an area of the second transparent region 2b. In the case of partial overlap, an area of the light shielding member 33 may be greater than or equal to an area of the second transparent region 2b, or may be less than or equal to an area of the second transparent region 2b. The foregoing descriptions of "aligned" are also applicable to the following. In addition, for ease of description, "reaching/locating/moving to a limit position to be aligned with..." is also referred to as "aligned" in the following descriptions.

The following is described by using an example in which the light shielding member 33 may be aligned with the second transparent region 2b (or the first transparent region 2a) and the front-end optical device 34 may be aligned with the first transparent region 2a (or the second transparent region 2b). It may be understood that this is merely an example.

As shown in FIG. 2(a) and FIG. 2(b), starting from the default state, the drive apparatus may drive the light shielding member 33 to move rightward to the limit position aligned with the first transparent region 2a, so that the light shielding member 33 is located on the transmission path of the first external light that passes through the first transparent region 2a. In addition, the drive apparatus may drive the front-end optical device 34 to move leftward to the limit position aligned with the second transparent region 2b, so that the front-end optical device 34 is located on the transmission path of the second external light that passes through the second transparent region 2b.

That the drive apparatus drives the light shielding member 33 and the front-end optical device 34 to implement "reverse linkage" between the light shielding member 33 and the front-end optical device 34 is described above by using state switching from FIG. 2(a) to FIG. 2(b) as an example. It may be understood that state switching from FIG. 2(b) to FIG. 2(a) also complies with an action process of "reverse linkage". Details are not described herein again.

In an embodiment, the drive apparatus may keep the light shielding member 33 and the front-end optical device 34 at any position between the first transparent region 2a and the second transparent region 2b, that is, the drive apparatus is not limited to driving the light shielding member 33 to reach two limit positions aligned with the first transparent region 2a and the second transparent region 2b, and may further drive the light shielding member 33 to move to any position between the two limit positions and to stay. The drive apparatus is not limited to driving the front-end optical device 34 to reach the two limit positions aligned with the first transparent region 2a and the second transparent region 2b, and may further drive the front-end optical device 34 to move to any position between the two limit positions and to stay. In another embodiment, the drive apparatus can drive the light shielding member 33 and the front-end optical device 34 only to reach the two limit positions aligned with the first transparent region 2a and the second transparent region 2b, and cannot implement a function of staying at any position between the two limit positions.

In the state shown in FIG. 2(a), when the light shielding member 33 is aligned with the second transparent region 2b, the second external light is blocked by the light shielding member 33 and cannot enter the back-end imaging device 35. In this case, the front-end optical device 34 is aligned with the first transparent region 2a, the first external light may pass through the first transparent region 2a and be deflected by the front-end optical device 34 to the back-end imaging device 35, and the back-end imaging device 35 may process the first external light to implement imaging. Imaging is performed by using the first external light. For example, imaging with a first focal length range may be implemented.

In the state shown in FIG. 2(b), when the light shielding member 33 is aligned with the first transparent region 2a, the first external light is blocked by the light shielding member 33 and cannot enter the back-end imaging device 35. In this case, the front-end optical device 34 is aligned with the second transparent region 2b, the second external light may pass through the second transparent region 2b and be deflected by the front-end optical device 34 to the back-end imaging device 35, and the back-end imaging device 35 may process the second external light to implement imaging. Imaging is performed by using the second external light. For example, imaging with a second focal length range may be implemented.

In this embodiment, for example, a processor of the electronic device 1 may respond to a shooting instruction, and transmit a control signal to the drive apparatus, so that the drive apparatus drives the front-end optical device 34 and the light shielding member 33 to move to corresponding positions, thereby implementing a corresponding shooting effect.

For example, a user may touch a touchscreen or a button of the electronic device 1 to transmit a first shooting instruction, or control a handheld support (such as a selfie stick or a handheld pan-tilt-zoom) that holds the electronic device 1, to transmit a first shooting instruction, or transmit a first shooting instruction in a voice manner. The first shooting instruction is used to implement imaging with the first focal length range. The processor may respond to the first shooting instruction, and transmit a first control signal to the drive apparatus, so that the drive apparatus drives the front-end optical device 34 and the light shielding member 33 to move to a position shown in FIG. 2(a), and the camera module 3 implements imaging with the first focal length range.

For example, the user may transmit a second shooting instruction in any one of the foregoing manners, and the second shooting instruction is used to implement imaging with the second focal length range. The processor may respond to the second shooting instruction, and transmit a second control signal to the drive apparatus, so that the drive apparatus drives the front-end optical device 34 and the light shielding member 33 to move to a position shown in FIG. 2(b), and the camera module 3 implements imaging with the second focal length range.

In the embodiments shown in FIG. 2(a) and FIG. 2(b), the light shielding member 33, the front-end optical device 34, and the drive apparatus are disposed, so that the drive apparatus drives the light shielding member 33 and the front-end optical device 34 to be reversely linked. The two optical paths, namely, the first external light and the second external light, may be implemented in one camera module 3, so that the camera module 3 implements shooting with a plurality of focal length ranges on a premise of using a set of back-end imaging devices 35, to provide a larger zoom ratio, thereby improving an imaging effect. The imaging effect is improved by moving the front-end optical device 34 and sharing the back-end imaging device 35, instead of newly adding a camera lens or a camera module. Therefore, product space and costs can be reduced.

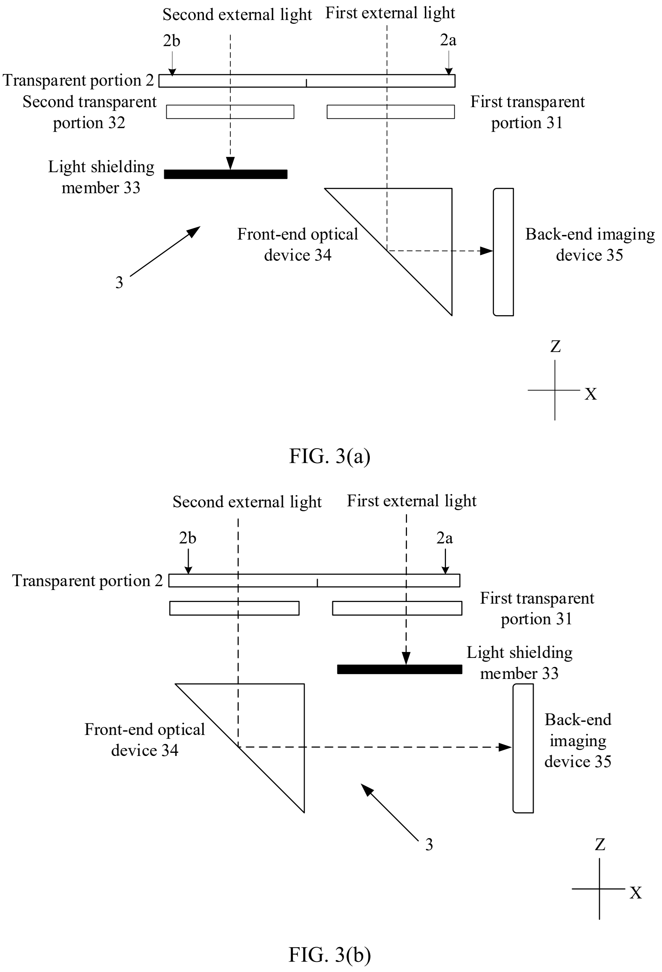

Embodiments in FIG. 3(a) and FIG. 3(b) may be obtained by performing adjustment based on the embodiments shown in FIG. 2(a) and FIG. 2(b). As shown in FIG. 3(a) and FIG. 3(b), in addition to the light shielding member 33, the front-end optical device 34, the drive apparatus, and the back-end imaging device 35, the camera module 3 may further include a first transparent portion 31 and a second transparent portion 32. The first transparent portion 31 is disposed in the first light-taking region, and the second transparent portion 32 is disposed in the second light-taking region.

As shown in FIG. 3(a), the first transparent portion 31 and the second transparent portion 32 may be disposed side by side. For example, the first transparent portion 31 and the second transparent portion 32 may be mounted on a housing of the camera module 3, and the first transparent portion 31 and the second transparent portion 32 may serve as entrances for the camera module 3 to collect light. The first transparent portion 31 may be disposed in the first transparent region 2a, and the first transparent portion 31 and the first transparent region 2a completely overlap or only partially overlap. In the case of complete overlap, an area of the first transparent portion 31 may be consistent with an area of the first transparent region 2a. In the case of partial overlap, an area of the first transparent portion 31 may be less than or equal to an area of the first transparent region 2a, or may be greater than or equal to an area of the first transparent region 2a. The second transparent portion 32 may be disposed in the second transparent region 2b, and the second transparent portion 32 and the second transparent region 2b completely overlap or only partially overlap. In the case of complete overlap, an area of the second transparent portion 32 may be consistent with an area of the second transparent region 2b. In the case of partial overlap, an area of the second transparent portion 32 may be less than or equal to an area of the second transparent region 2b, or may be greater than or equal to an area of the second transparent region 2b.

The first transparent portion 31 may have good light transmission performance, and is used for transmission of external light. A structure and a material of the first transparent portion 31 may be determined as required. For example, the first transparent portion 31 may be a camera lens. The first transparent portion 31 may include an optical lens, and may further include a component that has a mechanical function such as fastening, connecting, supporting, limiting, and/or protecting the optical lens. A side that is of the first transparent portion 31 and that receives external light may be referred to as a light entrance side. The light entrance side is, for example, an upper side in FIG. 3(a), and the external light that passes through the first transparent portion 31 is referred to as first external light. A side that is of the first transparent portion 31 and on which first external light exits may be referred to as a light exit side. The light exit side is, for example, a lower side in FIG. 3(a).

The second transparent portion 32 may have good light transmission performance, and is used for transmission of external light. A structure and a material of the second transparent portion 32 may be determined as required. For example, the second transparent portion 32 may be a camera lens. The second transparent portion 32 may include an optical lens, and may further include a component that has a mechanical function such as fastening, connecting, supporting, limiting, and/or protecting the optical lens. A side that is of the second transparent portion 32 and that receives external light may be referred to as a light entrance side. The light entrance side is, for example, an upper side in FIG. 3(a), and the external light that passes through the second transparent portion 32 is referred to as second external light. A side that is of the second transparent portion 32 and on which second external light exits may be referred to as a light exit side. The light exit side is, for example, a lower side in FIG. 3(a).

As shown in FIG. 3(a), for example, the light shielding member 33, the front-end optical device 34, and the back-end imaging device 35 may all be located on the light exit side of the first transparent portion 31 and the second transparent portion 32. A position of the drive apparatus is not limited. For example, the drive apparatus may be located on the light exit side of the first transparent portion 31 and the second transparent portion 32, or may be located at another proper position.

FIG. 3(a) and FIG. 3(b) may indicate a process in which the drive apparatus drives the light shielding member 33 and the front-end optical device 34 to be reversely linked. The process and an imaging principle are the same as those described above, and are not repeated herein again.

In the embodiments shown in FIG. 3(a) and FIG. 3(b), the first transparent portion 31 and the second transparent portion 32 may package an internal structure of the camera module 3, to ensure structural performance and optical performance of the camera module 3. It is easily understood according to the foregoing descriptions that, in this embodiment, the light shielding member 33, the front-end optical device 34, and the drive apparatus are disposed, so that the drive apparatus drives the light shielding member 33 and the front-end optical device 34 to be reversely linked. Two optical paths, namely, the first external light and the second external light, may be implemented in one camera module 3, so that the camera module 3 implements shooting with a plurality of focal length ranges on a premise of using a set of back-end imaging devices 35, to provide a larger zoom ratio, thereby improving an imaging effect. The imaging effect is improved by moving the front-end optical device 34 and sharing the back-end imaging device 35, instead of newly adding a camera lens or a camera module. Therefore, product space and costs can be reduced.

Based on the foregoing descriptions about FIG. 3(a) and FIG. 3(b), it may be understood that, in another embodiment, the light shielding member 33 may be disposed on the light entrance side of the first transparent portion 31 and the second transparent portion 32, that is, the light shielding member 33 is disposed above the first transparent portion 31 and the second transparent portion 32. Keeping the front-end optical device 34 on the light exit side of the first transparent portion 31 and the second transparent portion 32 may also implement a light blocking function of the light shielding member 33 and reverse linkage between the light shielding member 33 and the front-end optical device 34. The drive apparatus and the like may be adaptively adjusted. The solution in this embodiment may meet some product requirements.

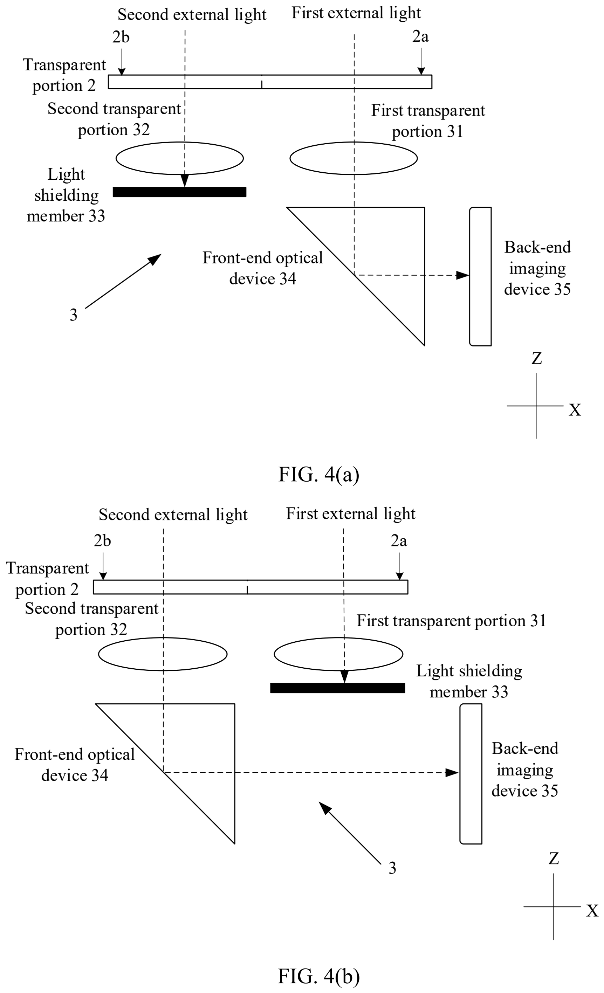

Embodiments in FIG. 4(a) and FIG. 4(b) may be obtained by performing adjustment based on the embodiments shown in FIG. 3(a) and FIG. 3(b). As shown in FIG. 4(a) and FIG. 4(b), the first transparent portion 31 and the second transparent portion 32 in the camera module 3 not only may be used for transmission of light, but also may be used for performing optical processing on light, to implement imaging. Specifically,
the first transparent portion 31 may include at least one optical lens. The optical lens may perform optical processing on external light. The optical processing includes but is not limited to one or more of focusing, correction, light intensity control, visual effect improvement, and the like. The first transparent portion 31 may further include a component that has a mechanical function such as fastening, connecting, supporting, limiting, and/or protecting the optical lens.

The second transparent portion 32 may include at least one optical lens. The optical lens may perform optical processing on external light. The optical processing includes but is not limited to one or more of focusing, correction, light intensity control, visual effect improvement, and the like. The second transparent portion 32 may further include a component that has a mechanical function such as fastening, connecting, supporting, and/or limiting the optical lens.

In this embodiment, an optical parameter of the first transparent portion 31 and an optical parameter of the second transparent portion 32 may be inconsistent, and the optical parameters include but are not limited to a focal length. In another embodiment, an optical parameter of the first transparent portion 31 and an optical parameter of the second transparent portion 32 may be consistent, and the first transparent portion 31 and the second transparent portion 32 may be, for example, two same camera lenses.

FIG. 4(a) and FIG. 4(b) may indicate a process in which the drive apparatus drives the light shielding member 33 and the front-end optical device 34 to be reversely linked. The process and an imaging principle are the same as those described above, and are not repeated herein again.

In the embodiments shown in FIG. 4(a) and FIG. 4(b), when focal lengths of the first transparent portion 31 and the second transparent portion 32 are different, the camera module 3 may implement shooting with a plurality of focal length ranges, and may further implement multi-function shooting (implement "multi-camera integration"). The multi-function shooting includes but is not limited to at least one of a primary camera, a long-focus lens, a wide-angle lens, a macro lens, a depth of field, and the like.

For example, when imaging is performed by using the first external light, the camera module 3 may be used as a primary camera, and is suitable for shooting various scenes with high shooting quality. When imaging is performed by using the second external light, the camera module 3 may implement long-focus shooting, may implement optical zoom and zoom in on a distant object, and is suitable for shooting a distant object. Alternatively, when imaging is performed by using the second external light, the camera module 3 may implement wide-angle shooting, and is suitable for shooting a wide scene. Alternatively, when imaging is performed by using the second external light, the camera module 3 may implement macro-shooting, and may shoot very macro details. Alternatively, when imaging is performed by using the second external light, the camera module 3 may shoot depth of field information, to implement functions such as background blurring and a portrait mode. It may be understood that the foregoing descriptions are merely an example. Actually, this embodiment does not limit a specific external light used for imaging for each function during the foregoing multi-functional shooting.

In the embodiments shown in FIG. 4(a) and FIG. 4(b), when focal lengths of the first transparent portion 31 and the second transparent portion 32 are the same, the camera module 3 may still implement shooting with a plurality of focal length ranges, to increase a zoom ratio, thereby ensuring an imaging effect.

In another embodiment, one of the first transparent portion 31 and the second transparent portion 32 includes an optical lens that can perform optical processing on external light, and the other has only light transmission performance but does not perform optical processing. The solution in this embodiment may also implement shooting with a plurality of focal length ranges, to increase a zoom ratio, thereby enhancing an imaging effect.

As shown in FIG. 1 to FIG. 4(b), for example, the camera module 3 may be a periscope-type camera module, and an optical axis direction of the camera module 3 is any direction on an XY plane. The front-end optical device 34 may further play a role of deflecting an optical path. The foregoing reverse linkage motion design and the corresponding imaging manner are applied to the periscope-type camera module, so that the periscope-type camera module can extend more focal length ranges without further increasing a volume, to increase a zoom ratio, and increase a shooting function, to implement "multi-camera integration", thereby improving an imaging effect.

In another embodiment, the camera module 3 may be a common camera module, and an optical axis direction of the camera module 3 is a Z direction.

The foregoing describes a frame structure and the working principle of the camera module 3. The following describes in detail a mechanical structure of the camera module 3 by using an example in which the camera module 3 is a periscope-type camera module and the camera module 3 includes the first transparent portion 31 and the second transparent portion 32 in any one of the foregoing embodiments.

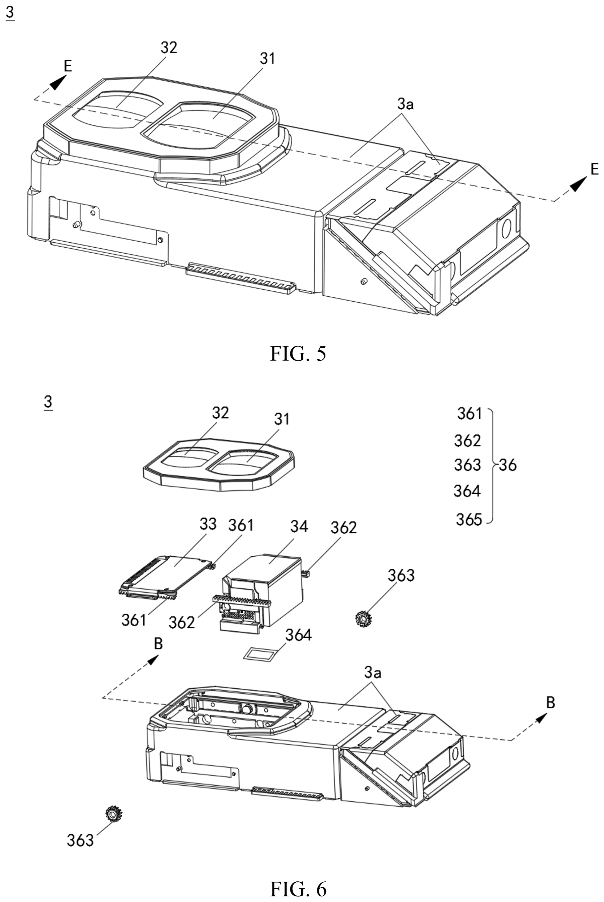

As shown in FIG. 5, FIG. 6, and FIG. 7, the camera module 3 may include a first transparent portion 31, a second transparent portion 32, a light shielding member 33, a front-end optical device 34, a back-end imaging device 35, a drive apparatus 36, and the like.

As shown in FIG. 5 to FIG. 7, for example, the camera module 3 may further include a module housing 3a. The module housing 3a has a cavity. The light shielding member 33, the front-end optical device 34, the back-end imaging device 35, the drive apparatus 36, and the like may all be mounted in the cavity of the module housing 3a, and the module housing 3a may perform functions such as packaging, protecting, limiting, and structural support for components such as the light shielding member 33, the front-end optical device 34, the back-end imaging device 35, and the drive apparatus 36. For example, the cavity of the module housing 3a may have an opening. Both the first transparent portion 31 and the second transparent portion 32 are mounted on the module housing 3a. At least a part of the first transparent portion 31 and at least a part of the second transparent portion 32 may be located outside the cavity of the module housing 3a, and the first transparent portion 31 and the second transparent portion 32 cover the opening of the cavity.

The drive apparatus 36 may include a drive source and a transmission mechanism. The drive source is configured to provide drive force, and the transmission mechanism is configured to implement transmission.

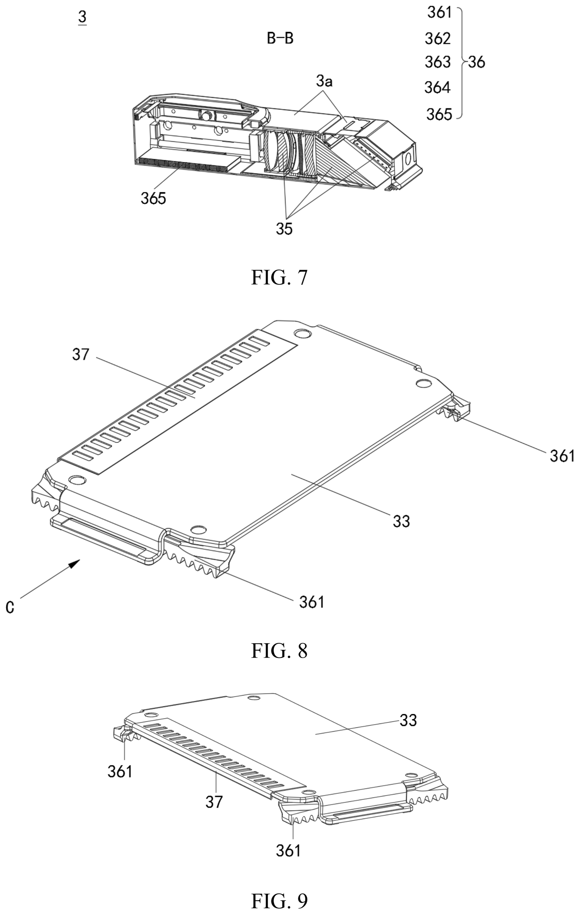

As shown in FIG. 6 and FIG. 7, for example, the drive source in the drive apparatus 36 may be a voice coil motor (voice coil motor, VCM). The voice coil motor may include a magnet 365 and a coil 364. The magnet 365 exerts electromagnetic force on the coil. For example, the magnet 365 may be mounted in the module housing 3a, and the coil 364 may be fastened to the front-end optical device 34 (details continue to be described below).

In another embodiment, the drive source may be any other proper power apparatus besides the VCM, including but not limited to a piezoelectric motor, a shape memory alloy (shape memory alloys, SMA) wire motor, a linear motor, and the like. The following is described still by using an example in which the drive source is a VCM.

As shown in FIG. 6, for example, the transmission mechanism in the drive apparatus 36 may include a first rack 361, a second rack 362, and a gear 363.

As shown in FIG. 8 and FIG. 9, the first rack 361 may be connected to the light shielding member 33, and the first rack 361 may be fastened to the light shielding member 33 through assembly, or may be integrated with the light shielding member 33. For example, there may be two first racks 361, and the two first racks 361 are respectively connected to two opposite sides of the light shielding member 33.

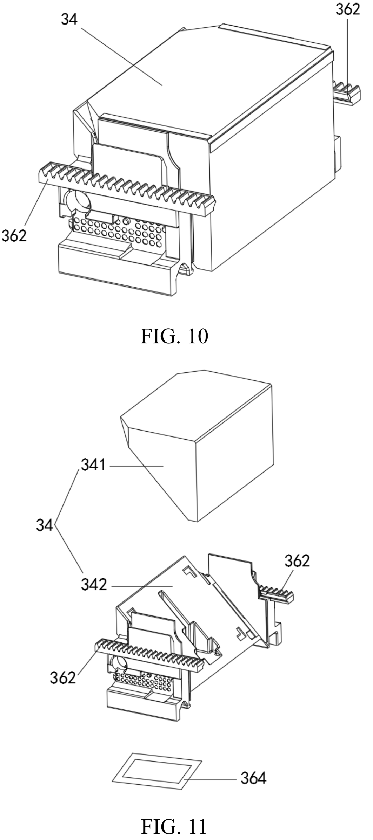

As shown in FIG. 10 and FIG. 11, the second rack 362 may be connected to the front-end optical device 34, and the second rack 362 may be fastened to the front-end optical device 34 through assembly, or may be integrated with the front-end optical device 34. For example, there may be two second racks 362, and the two second racks 362 are respectively connected to two opposite sides of the front-end optical device 34.

As shown in FIG. 11, for example, the front-end optical device 34 may include an optical lens 341 and a support 342, and the optical lens 341 is fastened on the support 342. The optical lens 341 is configured to deflect an optical path, and may be, for example, a prism. In another embodiment, the optical lens 341 may be a reflector. For example, the two second racks 362 are respectively connected to two opposite sides of the support 342.

In addition, as shown in FIG. 11, for example, the coil 364 may be fastened to the support 342, and the coil 364 may be located on a side that is of the support 342 and that faces away from the optical lens 341.

As shown in FIG. 6, the gear 363 is rotatably mounted on an inner wall of the module housing 3a. For example, there may be two gears 363, and the two gears 363 are respectively disposed on two opposite sides of the module housing 3a.

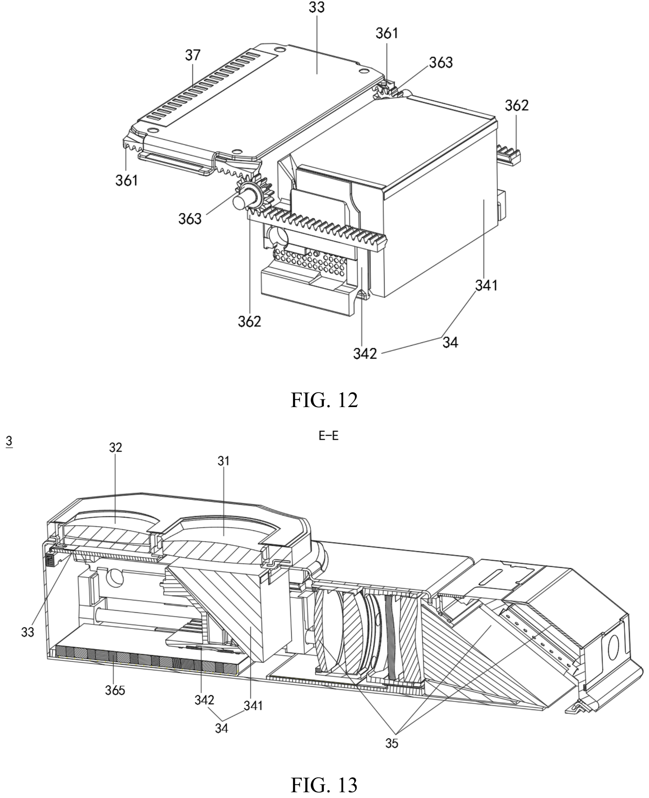

FIG. 12 is a diagram of a structure in which a light shielding member 33 is connected to a front-end optical device 34 through a transmission mechanism. As shown in FIG. 12, one first rack 361, one second rack 362, and one gear 363 form one gear-dual-rack transmission mechanism, and two gear-dual-rack transmission mechanisms are respectively located on two opposite sides of the light shielding member 33 (or two opposite sides of the front-end optical device 34). In each gear-dual-rack transmission mechanism, the first rack 361 and the second rack 362 may be respectively disposed on two opposite sides of the gear 363, and are both meshed with the gear 363.

In this embodiment, one gear-dual-rack transmission mechanism is disposed on each of the two opposite sides of the light shielding member 33 (or the two opposite sides of the front-end optical device 34), so that a structure can be stable and transmission can be reliable. According to a requirement, in another embodiment, only one gear-dual-rack transmission mechanism may be disposed, and a position of the gear-dual-rack transmission mechanism may be set as required, to ensure structural performance and transmission performance. For example, a gear-dual-rack transmission mechanism may be disposed on a side of the light shielding member 33, and a guide structure is disposed on an opposite side of the light shielding member 33. The guide structure may include, for example, a guide rod or a guide slot, so that the opposite side of the light shielding member 33 may move along a specified track.

The following describes a drive principle of the drive apparatus 36 in this embodiment.

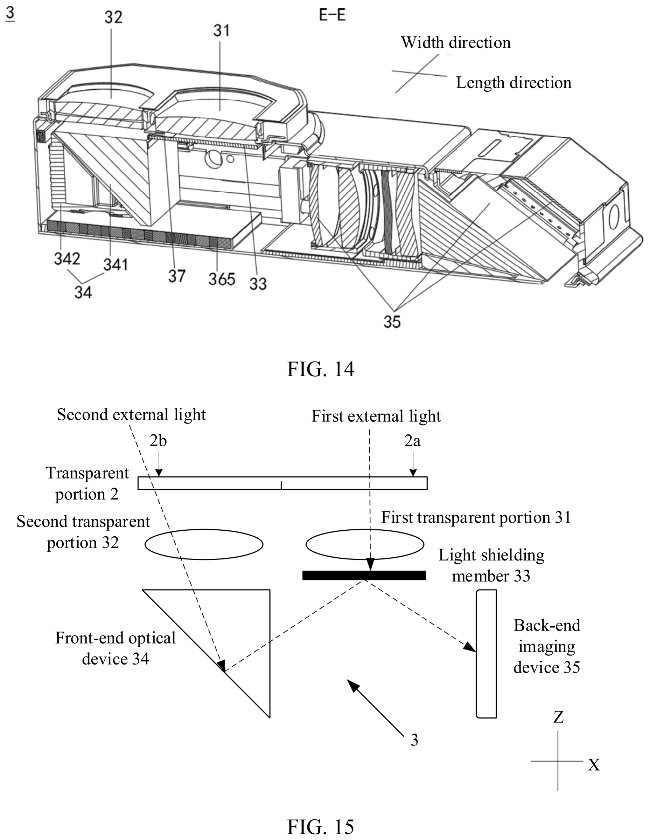

FIG. 13 is a diagram of an E-E cross-sectional structure of the camera module 3 shown in FIG. 5 in a state. The state of the camera module 3 in FIG. 13 may be the same as that shown in FIG. 4(a). FIG. 14 is a diagram of an E-E cross-sectional structure of the camera module 3 shown in FIG. 5 in another state. The state of the camera module 3 in FIG. 14 may be the same as that shown in FIG. 4(b).

As shown in FIG. 13 and FIG. 14, the magnet 365 may exert electromagnetic force on the coil 364 at the bottom of the support 342, and the coil 364 may drive the support 342 and the optical lens 341 on the support 342 to move. The support 342 may transfer motion to the light shielding member 33 through the gear-dual-rack transmission mechanism. Under a transmission action of the gear-dual-rack transmission mechanism, the front-end optical device 34 and the light shielding member 33 may implement reverse linkage, so that the front-end optical device 34 and the light shielding member 33 may move between the first transparent portion 31 and the second transparent portion 32. In this embodiment, the drive source may directly drive the front-end optical device 34, the gear-dual-rack transmission mechanism connects the light shielding member 33 and the front-end optical device 34, and the front-end optical device 34 may transfer motion to the light shielding member 33 through the gear-dual-rack transmission mechanism.

In this embodiment, for example, a processor of the electronic device 1 may respond to a shooting instruction, and transmit a control signal to the VCM, to drive the front-end optical device 34 and the light shielding member 33 to move to corresponding positions, thereby implementing a corresponding shooting effect. An imaging principle of a shooting process is described in detail above, and is not described herein again.

The gear-dual-rack transmission mechanism used in this embodiment may be considered as rigid transmission. Transmission efficiency of the rigid transmission is high, so that push force that needs to be provided by the drive source is small, motion precision of the light shielding member 33 is high, and anti-drop performance of the camera module 3 is good. A manufacturing process of the transmission mechanism is mature, assembly is simple, facilitating mass production.

In another embodiment, the drive source may alternatively be connected to the gear-dual-rack transmission mechanism, the drive source may directly drive the gear-dual-rack transmission mechanism to generate mechanism motion, and the gear-dual-rack transmission mechanism transfers motion to the light shielding member 33 and the front-end optical device 34, so that the two are reversely linked. The drive source includes but is not limited to a piezoelectric motor, an SMA wire motor, a linear motor, and the like. For example, the drive source may be connected to the gear 363, or may be connected to the first rack 361 and the second rack 362. As shown in FIG. 15, when the front-end optical device 34 moves to a side of the second transparent portion 32 and the light shielding member 33 moves to a side of the first transparent portion 31, some second external light may be refracted by the front-end optical device 34 to the bottom of the light shielding member 33, and then reflected by the bottom of the light shielding member 33 to the back-end imaging device 35. The second external light transmitted along the path is stray light that affects imaging quality. In view of this, in an embodiment, to reduce impact of the stray light shown in FIG. 15 on imaging, a light extinction structure may be disposed at the bottom of the light shielding member 33. A description is given below.

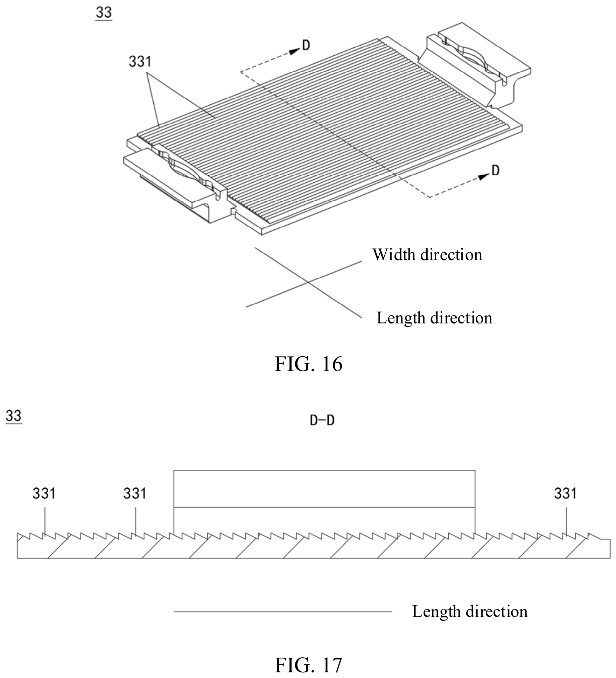

As shown in FIG. 14 and FIG. 16, a first side and a second side of the light shielding member 33 may be defined, and the first side and the second side are disposed opposite to each other. The first side is configured to receive external light. The first side is, for example, an upper side in FIG. 14 or a lower side in FIG. 16. The second side is, for example, a lower side in FIG. 14 or an upper side in FIG. 16. A plurality of sawteeth 331 may be disposed on the second side (or the bottom of the light shielding member 33) of the light shielding member 33. For example, the sawteeth 331 may extend roughly in a width direction of the camera module 3. The sawteeth 331 may be arranged according to a specific rule, for example, may be sequentially arranged in a length direction of the camera module 3 to form a sawtooth array.

FIG. 17 is a diagram of a D-D cross-sectional structure of the light shielding member 33 shown in FIG. 16. As shown in FIG. 17, for example, structures of the sawteeth 331 on the light shielding member 33 may be consistent or basically consistent. A cross-sectional shape of the sawtooth 331 may be, for example, a triangle.

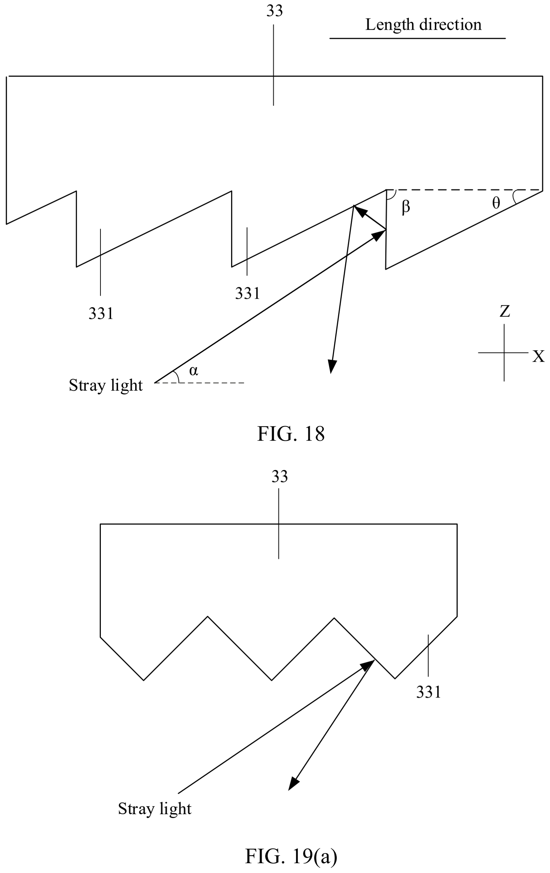

FIG. 18 is a diagram of a partial structure of the light shielding member 33 in FIG. 17. FIG. 18 further shows a transmission path of stray light shown in FIG. 15. As shown in FIG. 18, the stray light may be emitted from an incident angle α to a surface of the sawtooth 331, and the incident angle α may be an included angle formed by the stray light and an XY plane. Due to the cross-sectional shape of the sawtooth 331, the stray light may be reflected by the sawtooth 331 a plurality of times, and finally emitted. After reflection is performed a plurality of times, energy of the stray light is consumed and weakened, and therefore, an amount of light entering the back-end imaging device 35 is reduced, thereby reducing impact of stray light on imaging quality. In addition, the stray light may be finally refracted by the sawtooth 331 to another direction, and does not enter the back-end imaging device 35. This also helps reduce impact of stray light on imaging quality.

As shown in FIG. 18, an included angle β and an included angle θ may be defined in the cross-sectional triangle of the sawtooth 331, and the included angle β and the included angle θ may affect a specific construction of a triangular cross-section of the sawtooth 331. For example, the included angles β and θ and the incident angle α may meet the following relational expressions: 90° - α ≤ β ≤ 90°, and α ≤ θ ≤ 90°. When the included angle β and the included angle θ fall within a range, an effect of eliminating the stray light is good. For example, when the incident angle α is equal to 34°, 56° ≤ β ≤ 90°, and 34 ≤ θ ≤ 90°. For example, β may be 56°, 70°, 90°, or the like, and θ may be 34°, 62°, 90°, or the like.

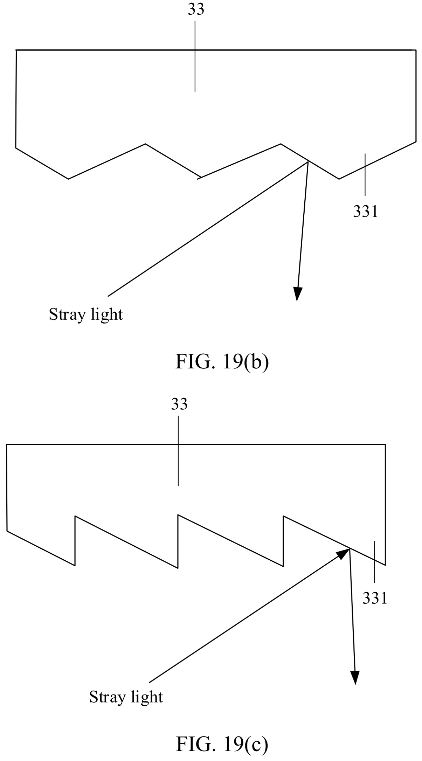

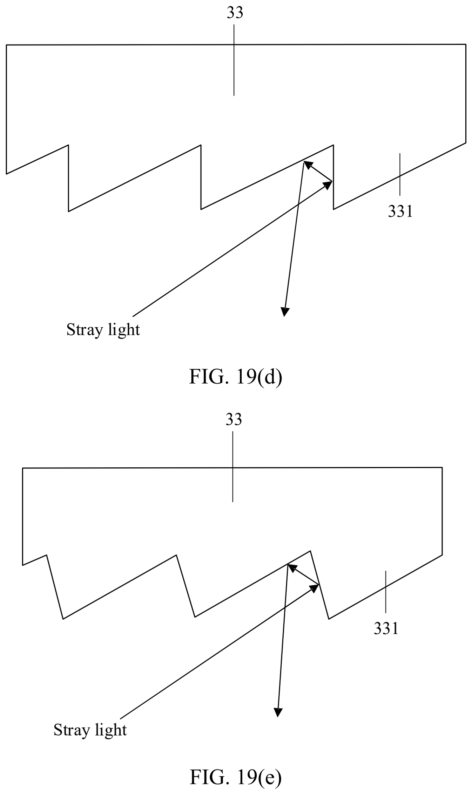

FIG. 19(a), FIG. 19(b), FIG. 19(c), FIG. 19(d), and FIG. 19(e) respectively show different cross-sectional triangles of sawteeth 331 reflecting stray light. As shown in FIG. 19(a) to FIG. 19(e), incident angles of the stray light may be consistent. As the included angle β and the included angle θ change, quantities of times the stray light is reflected in the sawtooth 331 are different, and directions of the stray light finally reflected by the sawtooth 331 are also different. It may be understood that, a larger distance by which the stray light finally reflected by the sawtooth 331 deviates from the back-end imaging device 35 and a larger quantity of times the stray light is reflected in the sawtooth 331 indicate a better extinction effect.

In an embodiment, the cross-sectional triangle of the sawtooth 331 may not need to meet the foregoing relational expression. Alternatively, in another embodiment, the cross-section of the sawtooth 331 may be of another shape having a sharp angle.

It may be understood from the foregoing descriptions that, a sawtooth array is disposed at the bottom of the light shielding member 33, so that stray light on different paths can be eliminated, thereby greatly reducing impact of stray light on imaging quality. In an embodiment, the sawtooth array may not be formed, and the sawtooth 331 is disposed only at a required position on the light shielding member 33. Alternatively, in an embodiment, the light extinction structure may not be formed at the bottom of the light shielding member 33.

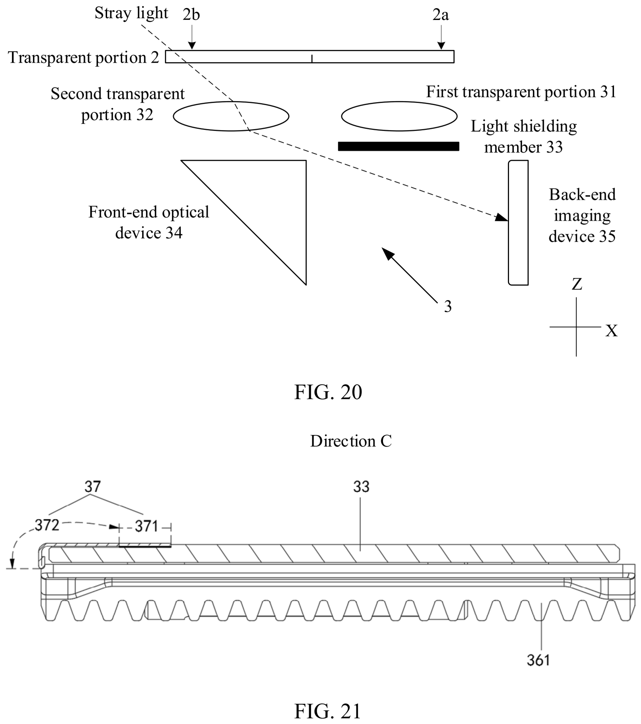

As shown in FIG. 20, to ensure that motion of the light shielding member 33 and motion of the front-end optical device 34 do not interfere with each other, a gap is reserved between the light shielding member 33 and the front-end optical device 34. When the front-end optical device 34 moves to the side of the second transparent portion 32 and the light shielding member 33 moves to the side of the first transparent portion 31, external light may pass through the gap to enter the back-end imaging device 35. The second external light transmitted along the path is stray light that affects imaging quality. In view of this, in an embodiment, to reduce impact of the stray light shown in FIG. 20 on imaging, a light shielding curtain may be disposed on the light shielding member 33 to block the stray light. A description is given below.

As shown in FIG. 8 and FIG. 9, in an embodiment, a light shielding curtain 37 may be disposed on the light shielding member 33. The light shielding curtain 37 may be disposed on an edge of the light shielding member 33. As shown in FIG. 8 and FIG. 20, when the light shielding member 33 is aligned with the first transparent portion 31, the light shielding curtain 37 may be located on a side that is of the light shielding member 33 and that is close to the front-end optical device 34. For example, the light shielding curtain 37 may be of a strip structure, and may generate elastic deformation to some extent.

FIG. 21 is a diagram in a direction C in FIG. 8. As shown in FIG. 21, for example, the light shielding curtain 37 may include a fastened part 371 and a cantilever part 372, and the fastened part 371 and the cantilever part 372 are connected to each other. The fastened part 371 may be basically flat on the light shielding member 33, and is fastened to the light shielding member 33. The fastening includes but is not limited to bonding. The cantilever part 372 may not be in contact with the light shielding member 33, but a gap exists between the cantilever part 372 and the light shielding member 33. As shown in FIG. 21 and FIG. 14, an end portion that is of the cantilever part 372 and that is away from the fastened part 371 may be bent toward the magnet 365. Alternatively, as shown in FIG. 21 and FIG. 20, the cantilever part 372 may be bent toward a direction away from the transparent portion 2.

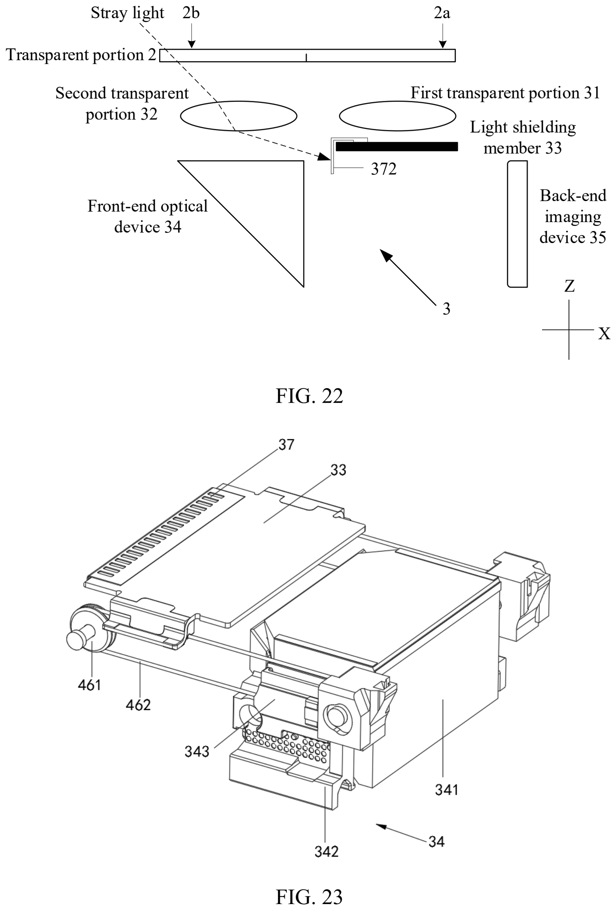

FIG. 22 shows a position of a cantilever part 372 relative to a front-end optical device 34 when a light shielding member 33 moves to a side of a first transparent portion 31. As shown in FIG. 22, the cantilever part 372 may be located between the light shielding member 33 and the front-end optical device 34, and may extend roughly in a Z direction. The cantilever part 372 may extend to a position not higher than a top surface of the front-end optical device 34. In this way, stray light entering from a gap between the light shielding member 33 and the front-end optical device 34 is blocked by the cantilever part 372 and cannot enter the back-end imaging device 35, thereby preventing the stray light from affecting imaging quality.

As shown in FIG. 22, in a process in which the light shielding member 33 moves leftward and the front-end optical device 34 moves rightward, the front-end optical device 34 comes into contact with the cantilever part 372 and pushes the cantilever part 372 upward, so that the cantilever part 372 generates elastic deformation. When the light shielding member 33 reaches a position aligned with the second transparent portion 32 and the front-end optical device 34 reaches a position aligned with the first transparent portion 31, the front-end optical device 34 is separated from the cantilever part 372, so that the cantilever part 372 recovers to a "natural droop" state.

Therefore, in this embodiment, the light shielding curtain 37 is disposed on the light shielding member 33, and the cantilever part 372 of the light shielding curtain 37 may be used to block stray light, to ensure imaging quality. In addition, due to elastic deformation performance of the cantilever part 372, reverse linkage between the light shielding member 33 and the front-end optical device 34 is not affected.

Based on the foregoing principle of blocking stray light, in another embodiment, as shown in FIG. 22, the light shielding curtain 37 may alternatively be disposed on an edge of the front-end optical device 34, and located on a side that is of the front-end optical device 34 and that is close to the light shielding member 33. The fastened part 371 is fastened to the front-end optical device 34. The cantilever part 372 may be bent or not bent relative to the fastened part 371, the cantilever part 372 may extend in a Z direction, and the cantilever part 372 may extend to a position not lower than a bottom surface of the light shielding member 33. It is easy to understand that the light shielding curtain 37 disposed on the front-end optical device 34 may alternatively block stray light entering from the gap between the front-end optical device 34 and the light shielding member 33.

In an embodiment of this application, adjustment may be performed based on the foregoing embodiment, and the gear-dual-rack transmission mechanism is replaced with a transmission wheel-rope transmission mechanism, so that reverse linkage between the light shielding member 33 and the front-end optical device 34 can also be implemented. A description is given below.

FIG. 23, FIG. 24, and FIG. 25 show a transmission wheel-rope transmission mechanism according to an embodiment. As shown in FIG. 23 to FIG. 25, the transmission wheel-rope transmission mechanism may include two transmission wheels 461 and a rope 462.

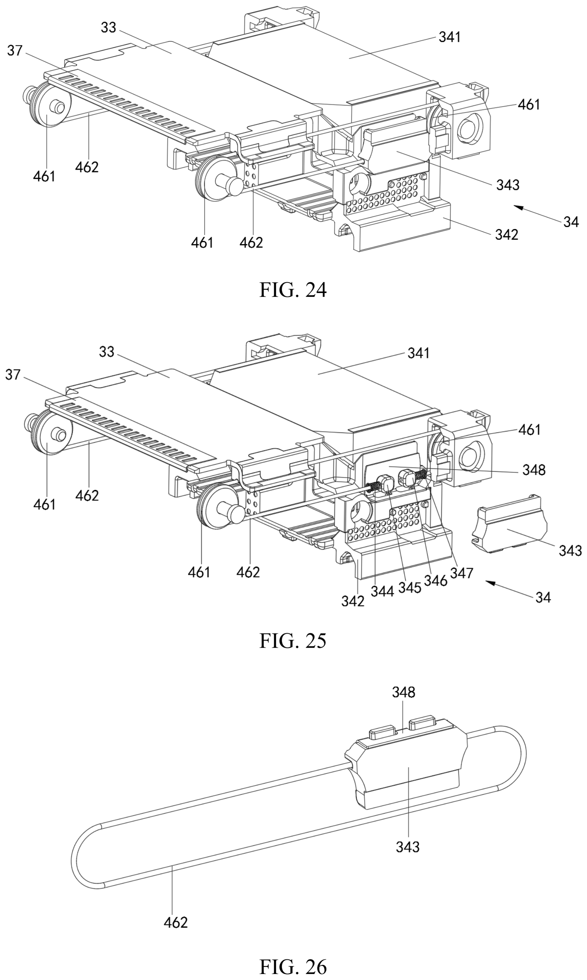

As shown in FIG. 25 and FIG. 7, the two transmission wheels 461 may be spaced apart. The two transmission wheels 461 may be rotatably connected to an inner side of the module housing 3a separately. For example, the transmission wheel 461 may have a circular contour. In another embodiment, the transmission wheel 461 is not limited to having a circular contour, and may alternatively have another smooth contour, such as an ellipse or an arc. In addition, in another embodiment, the transmission wheel 461 may alternatively be fixed without rotating.

As shown in FIG. 25, the rope 462 may wrap around the two transmission wheels 461 and be wound around peripheries of the two transmission wheels 461. The rope 462 may be used to fasten the light shielding member 33 and the front-end optical device 34 respectively on two opposite sides of a radial direction of the transmission wheel 461 (a connection between the rope 462 and the front-end optical device 34 continues to be described below). A material of the rope 462 is not limited, and includes but is not limited to a steel wire, a composite material, for example, Kevlar, rubber, and the like. The rope 462 may have a high elastic modulus and is not easy to deform, or may have a low elastic modulus and is easy to deform. A shape of a cross-section of the rope 462 is not limited, and includes but is not limited to a circle, a rectangle, a trapezoid, and the like.

In an embodiment, as shown in FIG. 26, FIG. 27, and FIG. 28, the front-end optical device 34 may further include a fastening housing 343, an elastic member 344, a fastening block 345, a fastening block 346, an elastic member 347, a bottom plate 348, and the like.

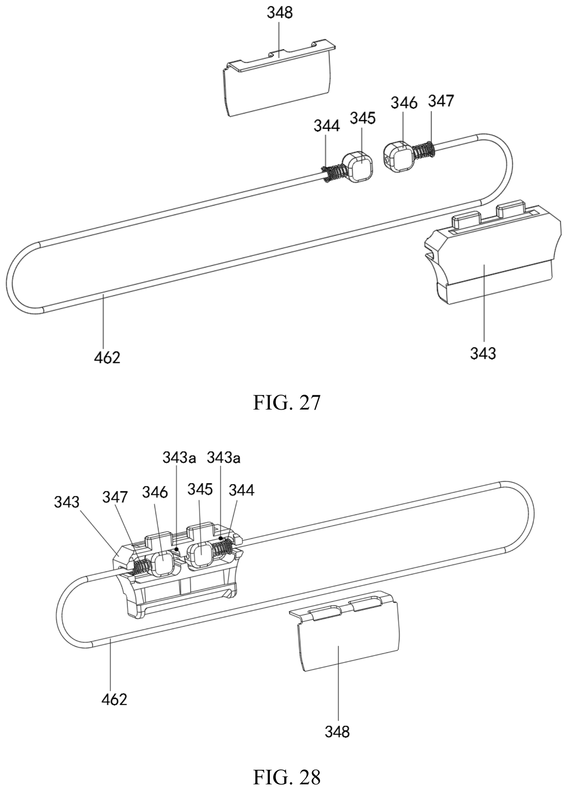

As shown in FIG. 28, for example, two accommodating slots 343a may be provided inside the fastening housing 343. The elastic member 344 and the fastening block 345 may be accommodated and limited in one accommodating slot 343a, and two opposite ends of the elastic member 344 may respectively abut against an inner wall of the accommodating slot 343a and the fastening block 345. The fastening block 346 and the elastic member 347 may be accommodated and limited in the other accommodating slot 343a, and two opposite ends of the elastic member 347 may respectively abut against the inner wall of the accommodating slot 343a and the fastening block 346. The elastic member 344 and the elastic member 347 may be, for example, springs.

As shown in FIG. 28, for example, at least one of the fastening block 345 and the fastening block 346 may slide in the accommodating slot 343a in which the fastening block 345 and the fastening block 346 are located. When the fastening block slides, the elastic member in contact with the fastening block generates elastic deformation. In another embodiment, the fastening block may not slide in the accommodating slot 343a, but is fastened in the accommodating slot 343a.

In another embodiment, at least one of the elastic member 344 and the elastic member 347 may be cancelled.

As shown in FIG. 26 to FIG. 28, the bottom plate 348 and the fastening housing 343 may perform enclosing to package the elastic member 344, the fastening block 345, the fastening block 346, and the elastic member 347. In this embodiment, the bottom plate 348 and the fastening housing 343 may be collectively referred to as an accommodating housing. As shown in FIG. 25 and FIG. 26, for example, the bottom plate 348 may be fastened to the support 342. Therefore, the fastening housing 343 and the elastic member 344, the fastening block 345, the fastening block 346, and the elastic member 347 that are in the fastening housing 343 may all be fastened to the support 342.

As shown in FIG. 25 and FIG. 27, for example, a portion that is of the rope 462 and that is located between the two transmission wheels 461 may be disconnected, one end of the disconnection may be fastened to the fastening block 345, and the elastic member 344 may be sleeved on a periphery of the end. The other end of the disconnection of the rope 462 may be fastened to the fastening block 346, and the elastic member 347 may be sleeved on a periphery of the end. In this way, the rope 462 may be connected to the front-end optical device 34.

In another embodiment, the rope 462 may be connected to the front-end optical device 34 in any proper manner, without using the foregoing structure. The rope 462 may be disconnected; or the rope 462 is not disconnected, and is a complete cycle.

In an embodiment, the rope 462 may also be connected to the light shielding member 33 in a design the same as or similar to a design of connecting the rope 462 and the front-end optical device 34. For example, the light shielding member 33 may also include a fastening block and a spring that are disposed in an accommodating housing, and the accommodating housing, and an end portion of the disconnection of the rope 462 may be fastened to the fastening block. It may be understood that, on a premise of ensuring a design requirement, to simplify a product structure and save space, the foregoing connection design of the rope 462 may be performed only at the front-end optical device 34 or the light shielding member 33.

The following describes a transmission principle of the transmission wheel-rope transmission mechanism in this embodiment.

As shown in FIG. 13, the magnet 365 may exert electromagnetic force on the coil 364 at the bottom of the support 342, and the coil 364 may drive the front-end optical device 34 to move. As shown in FIG. 25, because the front-end optical device 34 is connected to the rope 462, the front-end optical device 34 drives the rope 462 to move, and the rope 462 drives the transmission wheel 461 to rotate. In an embodiment in which the transmission wheel 461 is fastened, the rope 462 slides on a surface of the transmission wheel 461.

As shown in FIG. 25, the rope 462 further drives the light shielding member 33 fastened to the rope 462 to move. Due to a motion feature of the rope 462, the light shielding member 33 and the front-end optical device 34 are reversely linked. It may be understood that, the rope 462 moves in different directions, so that the light shielding member 33 and the front-end optical device 34 can move between the first transparent portion 31 and the second transparent portion 32. In this embodiment, the drive source may directly drive the front-end optical device 34, the transmission wheel-rope transmission mechanism connects the light shielding member 33 and the front-end optical device 34, and the front-end optical device 34 may transfer motion to the light shielding member 33 through the transmission wheel-rope transmission mechanism.

As shown in FIG. 28, the rope 462 is disconnected, the elastic member is mounted at a disconnection, and the fastening block is slidable. In this way, when the camera module 3 is greatly impacted (for example, in a scene such as falling or collision), impact force may drive the fastening block to slide, thereby reducing or avoiding a risk that the rope 462 is broken due to excessively strong impact force. When the impact disappears, the elastic member may restore elastic deformation, and the fastening block is pushed back to a default position. In addition, the elastic member may alternatively provide some functions of buffering and vibration absorption.

In another embodiment, the rope 462 may be disconnected, but the elastic member does not need to be mounted on the rope 462. In this case, a material with a small elastic modulus may be selected to manufacture the rope 462, so that the rope 462 has functions of buffering and vibration absorption, thereby preventing the rope 462 from breaking under impact.

In another embodiment, the rope 462 may be disconnected, an elastic member is disposed on only one of two ends of a disconnection, and an elastic member is not disposed on the other end.

In another embodiment, the rope 462 may be a complete cycle, and may be made of a material with a small elastic modulus, so that the rope 462 has functions of buffering and vibration absorption, thereby preventing the rope 462 from breaking under impact. Alternatively, the rope 462 may be made of a material with a large elastic modulus according to a product requirement.

In an embodiment, an elastic member may alternatively be mounted at the transmission wheel 461, so that the transmission wheel 461 serves functions of buffering and vibration absorption. In this case, an elastic member may not need to be mounted on the rope 462, or an elastic member may be mounted according to a product requirement.

For example, a transmission wheel-rope transmission mechanism may be disposed on each of two opposite sides of the light shielding member 33 (or two opposite sides of the front-end optical device 34), so that a structure can be stable, and transmission can be reliable. According to a requirement, in another embodiment, only one transmission wheel-rope transmission mechanism may alternatively be disposed, and a position of the transmission wheel-rope transmission mechanism may be set as required, to ensure structural performance and transmission performance. For example, a transmission wheel-rope transmission mechanism may be disposed on a side of the light shielding member 33, and a guide structure is disposed on an opposite side of the light shielding member 33. The guide structure may include, for example, a guide rod or a guide slot, so that the opposite side of the light shielding member 33 may move along a specified track.

The transmission wheel-rope transmission mechanism used in this embodiment may be considered as flexible transmission. The flexible transmission occupies small space, has small operating noise, may have buffering and vibration absorption performance, and has a small weight.

In another embodiment, the drive source may alternatively be connected to the transmission wheel-rope transmission mechanism, the drive source may directly drive the transmission wheel-rope transmission mechanism to generate mechanism motion, and the transmission wheel-rope transmission mechanism transfers motion to the light shielding member 33 and the front-end optical device 34, so that the two are reversely linked. The drive source includes but is not limited to a piezoelectric motor, an SMA wire motor, a linear motor, and the like. For example, the drive source may be connected to the transmission wheel 461 (the transmission wheel 461 is rotatable), or may be connected to the rope 462 (the transmission wheel 461 is rotatable or fastened).

In an embodiment of this application, the transmission mechanism may be replaced based on the solution in the foregoing embodiment, so that reverse linkage between the light shielding member 33 and the front-end optical device 34 can also be implemented. A description is given below.

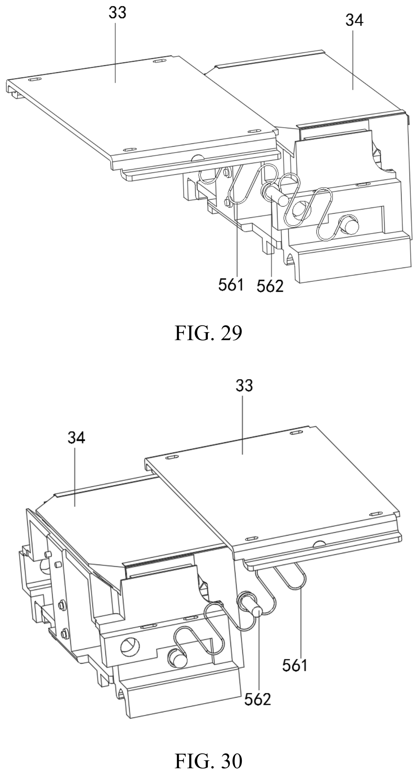

As shown in FIG. 29 and FIG. 30, in an embodiment, the transmission mechanism may include an elastic member 561 and a rotating shaft 562. The rotating shaft 562 is fastened in the camera module 3, for example, fastened on the module housing 3a. The elastic member 561 is rotatably connected to the rotating shaft 562, and connects the light shielding member 33 and the front-end optical device 34. For example, the elastic member 561 may have a curve shape, for example, may be bent repeatedly a plurality of times. The elastic member 561 has elastic deformation performance, for example, may be a torsion spring. The elastic member 561 is configured to rotate around the rotating shaft 562 under driving of the front-end optical device 34 to generate elastic deformation, and drive the light shielding member 33 to move. FIG. 29 and FIG. 30 respectively show posture changes of the elastic member 561 in different states. In this embodiment, the drive source may directly drive the front-end optical device 34, the elastic member 561 connects the light shielding member 33 and the front-end optical device 34, and the front-end optical device 34 may transfer motion to the light shielding member 33 through a transmission mechanism.

In another embodiment, the drive source may alternatively be connected to the transmission mechanism, the drive source may directly drive the transmission mechanism to generate mechanism motion, and the transmission mechanism transfers motion to the light shielding member 33 and the front-end optical device 34, so that the two are reversely linked. For example, the drive source may be connected to the elastic member 561, and the drive source drives the elastic member 561 to rotate around the rotating shaft 562, so that the elastic member 561 drives the light shielding member 33 and the front-end optical device 34 to be reversely linked.

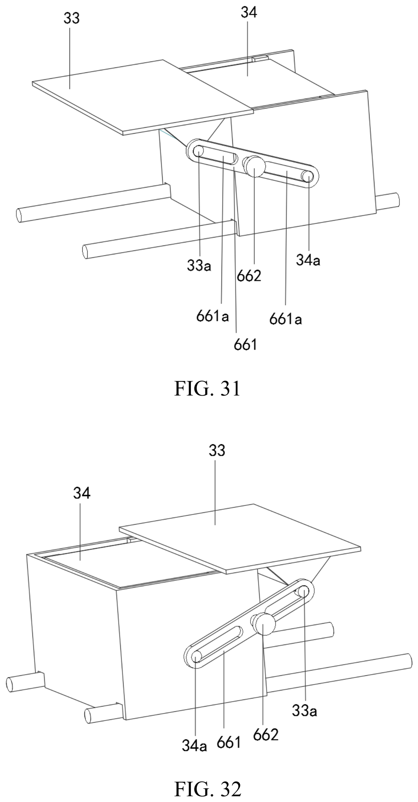

As shown in FIG. 31 and FIG. 32, in an embodiment, the transmission mechanism may be replaced with a connecting rod mechanism, and the connecting rod mechanism may include a connecting rod 661 and a rotating shaft 662. The rotating shaft 662 is fastened in the camera module 3, for example, may be fastened on the module housing 3a. The connecting rod 661 is rotatably connected to the rotating shaft 662. Two sliding slots 661a are provided on the connecting rod 661, and the sliding slot 661a may be, for example, of a runway shape. The sliding slot 661a may be a through hole or a blind hole. One sliding slot 661a forms sliding cooperation with a sliding pin 33a on the light shielding member 33, and the other sliding slot 661a forms sliding cooperation with a sliding pin 64a on the front-end optical device 34. Therefore, the connecting rod 661 may movably connect the light shielding member 33 and the front-end optical device 34.

FIG. 31 and FIG. 32 respectively show posture changes of the connecting rod 661 in different states. As shown in FIG. 31 and FIG. 32, the connecting rod 661 may rotate around the rotating shaft 662 under driving of the front-end optical device 34, and drive the light shielding member 33 to move. When the connecting rod 661 rotates, each sliding pin slides in a corresponding sliding slot 661a. In this embodiment, the drive source may directly drive the front-end optical device 34, the connecting rod 661 connects the light shielding member 33 and the front-end optical device 34, and the front-end optical device 34 may transfer motion to the light shielding member 33 through the connecting rod mechanism.

In another embodiment, the drive source may alternatively be connected to the connecting rod mechanism, the drive source may directly drive the connecting rod mechanism to generate mechanism motion, and the connecting rod mechanism transfers motion to the light shielding member 33 and the front-end optical device 34, so that the two are reversely linked. For example, the drive source may be connected to the connecting rod 661, and the drive source drives connecting rod 661 to rotate around the rotating shaft 662, so that the connecting rod 661 drives the light shielding member 33 and the front-end optical device 34 to be reversely linked.

In an embodiment of this application, based on the solution of the foregoing embodiment, the structure for blocking stray light shown in FIG. 21 may be replaced. A description is given below.

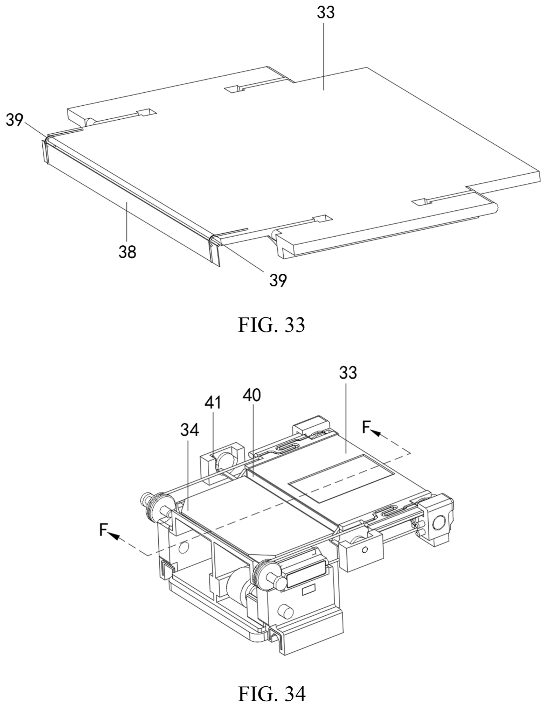

As shown in FIG. 33, in an embodiment, the camera module 3 may include a light shielding curtain 38 and a torsion spring 39. The light shielding curtain 38 and the torsion spring 39 are disposed on an edge of the light shielding member 33. The torsion spring 39 connects the light shielding curtain 38 and the light shielding member 33. The light shielding curtain 38 is rotatably connected to the light shielding member 33 through the torsion spring 39. The light shielding curtain 38 is not transparent and may block stray light.

As shown in FIG. 33 and FIG. 22, when the light shielding member 33 is aligned with the first transparent portion 31, the light shielding curtain 38 is located between the light shielding member 33 and the front-end optical device 34, and the light shielding curtain 38 may extend in the Z direction in FIG. 22. The light shielding curtain 38 may extend downward to a position not higher than a top surface of the front-end optical device 34. In this way, the light shielding curtain 38 may block stray light that passes through the second transparent portion 32 and enters from the gap between the light shielding member 38 and the front-end optical device 34. When the front-end optical device 34 moves rightward, the front-end optical device 34 comes into contact with the light shielding curtain 38 and pushes the light shielding curtain 38, so that the light shielding curtain 38 tilts. In this way, the light shielding curtain 38 basically does not block reverse linkage between the front-end optical device 34 and the light shielding member 33.

In another embodiment, as shown in FIG. 33 and FIG. 22, the light shielding curtain 38 and the torsion spring 39 may alternatively be disposed on an edge of the front-end optical device 34, and located on a side that is of the front-end optical device 34 and that is close to the light shielding member 33. The light shielding curtain 38 may be located on a side that is of the front-end optical device 34 and that faces the transparent portion 2. The light shielding curtain 38 may extend in the Z direction in FIG. 22, and the light shielding curtain 38 may extend upward to a position not lower than a bottom surface of the light shielding member 33. It is easy to understand that the light shielding curtain 38 disposed on the front-end optical device 34 may alternatively block stray light entering from the gap between the front-end optical device 34 and the light shielding member 33.

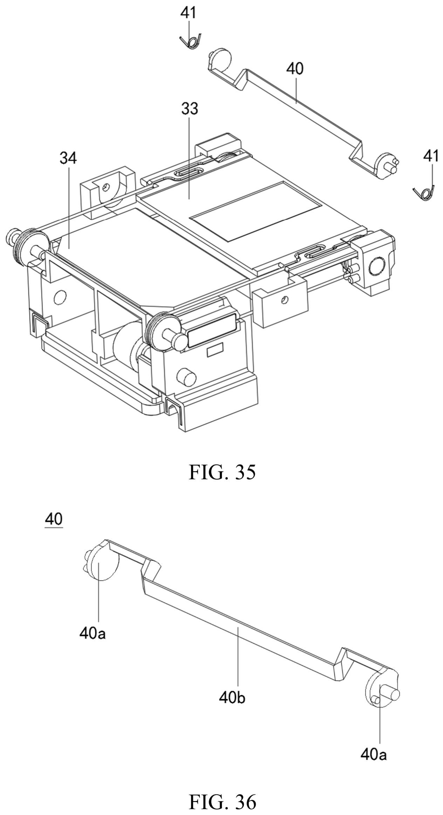

FIG. 34, FIG. 35, and FIG. 36 show a structure for blocking stray light in another embodiment. As shown in FIG. 34 to FIG. 36, the camera module may further include a light shielding curtain 40 and a torsion spring 41.

The light shielding curtain 40 may include a pin shaft 40a and a light shielding part 40b that are connected. For example, there may be two pin shafts 40a, and the two pin shafts 40a may be respectively connected to two ends of the light shielding part 40b. The pin shaft 40a is drivably disposed in the camera module 3, for example, disposed on the module housing 3a. The light shielding part 40b may be, for example, of a long strip-like structure. The torsion spring 41 is mounted on the pin shaft 40a, and the torsion spring 41 may be, for example, limited by the module housing 3a. The torsion spring 41 is configured to provide elastic restoring force for the pin shaft 40a.

As shown in FIG. 34 and FIG. 22, when the light shielding member 33 is aligned with the first transparent portion 31, the light shielding part 40b of the light shielding curtain 40 may be located between the light shielding member 33 and the front-end optical device 34, and the light shielding part 40b may extend in the Z direction in FIG. 22. The light shielding part 40b may extend downward to a position not higher than a top surface of the front-end optical device 34. In this way, the light shielding part 40b may block stray light that passes through the second transparent portion 32 and enters from the gap between the light shielding member 33 and the front-end optical device 34. The light shielding part 40b is configured to be pushed by the front-end optical device 34 when the front-end optical device 34 moves, to rotate around the pin shaft 40a. When the front-end optical device 34 moves rightward, the front-end optical device 34 comes into contact with the light shielding part 40b and pushes the light shielding part 40b, so that the light shielding part 40b tilts. In this way, the light shielding part 40b basically does not block reverse linkage between the front-end optical device 34 and the light shielding member 33.

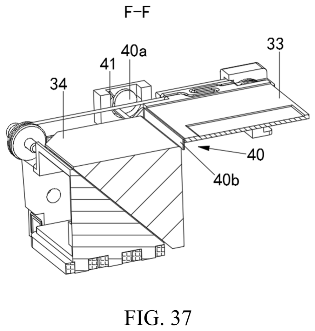

As shown in FIG. 37 and FIG. 4(a), when the light shielding member 33 is aligned with the second transparent portion 32, the light shielding part 40b of the light shielding curtain 40 may also be located between the light shielding member 33 and the front-end optical device 34, and the light shielding part 40b may extend in the Z direction in FIG. 4(a).

It may be understood that, the structure for blocking stray light shown in FIG. 21, the structure for blocking stray light shown in FIG. 33, and the structure for blocking stray light shown in FIG. 34 to FIG. 37 are parallel solutions, and any one of the solutions may be used to block stray light. In addition, each of the foregoing solutions for blocking stray light may be combined with a solution for disposing a sawtooth array on the light shielding member 33, to implement a good effect of blocking stray light.

For ease of understanding, the following explains and describes related technical terms used in embodiments of this application.

In descriptions of embodiments of this application, unless otherwise specified, "a plurality of" means two or more.

Terms such as "first" and "second" are used only for description purposes, and cannot be understood as an indication or implication of relative importance or an implicit indication of a quantity of indicated technical features. A feature limited by "first" or "second" may explicitly or implicitly include one or more features.

"Connection" should be understood in a broad sense. For example, "connection" may be a detachable connection, a nondetachable connection, a direct connection, or an indirect connection through an intermediate medium. "Fastening" should also be understood in a broad sense. For example, "fastening" may be direct fastening or indirect fastening through an intermediate medium.

The orientation terms mentioned in embodiments of this application, for example, "upper", "lower", "front", "rear", "left", "right", "inside", "outside", "side", "top", and "bottom" are merely directions with reference to the accompanying drawings. The orientation terms are used to better and more clearly describe and understand embodiments of this application, instead of explicitly indicating or implying that a specified apparatus or element needs to have a specific orientation and be constructed and operated in a specific orientation, and therefore cannot be understood as limitations on embodiments of this application.

In the descriptions of embodiments of this application, unless otherwise specified, "and/or" is merely an association relationship for describing an associated object, and indicates that three relationships may exist. For example, A and/or B may represent the following three cases: Only A exists alone, both A and B exist, and only B exists.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera module, wherein
the camera module has a first light-taking region and a second light-taking region, and the camera module comprises a light shielding member, a front-end optical device, a drive apparatus, and a back-end imaging device;
the drive apparatus is configured to drive the light shielding member and the front-end optical device to move between the first light-taking region and the second light-taking region, and enable the light shielding member and the front-end optical device to move in opposite directions, and
when the light shielding member reaches the first light-taking region, the front-end optical device reaches the second light-taking region, wherein the light shielding member is configured to block first external light that passes through the first light-taking region from being emitted to the back-end imaging device, and the front-end optical device is configured to enable second external light that passes through the second light-taking region to be emitted to the back-end imaging device;
when the light shielding member reaches the second light-taking region, the front-end optical device reaches the first light-taking region, wherein the light shielding member is configured to block the second external light that passes through the second light-taking region from being emitted to the back-end imaging device, and the front-end optical device is configured to enable the first external light that passes through the first light-taking region to be emitted to the back-end imaging device; and
the back-end imaging device is configured to perform imaging processing on the first external light or the second external light.

2. The camera module according to claim 1, wherein
the camera module further comprises a first transparent portion and a second transparent portion, the first transparent portion is disposed in the first light-taking region and is used for transmission of the first external light, and the second transparent portion is disposed in the second light-taking region and is used for transmission of the second external light; and
both the front-end optical device and the back-end imaging device are located on a light exit side of the first transparent portion and the second transparent portion.

3. The camera module according to claim 2, wherein
the light shielding member is located on the light exit side of the first transparent portion and the second transparent portion, or the light shielding member is located on a light entrance side of the first transparent portion and the second transparent portion.

4. The camera module according to claim 2 or 3, wherein
at least one of the first transparent portion and the second transparent portion comprises an optical lens, and the optical lens is configured to perform optical processing on external light.

5. The camera module according to claim 4, wherein
the first transparent portion and the second transparent portion each comprise an optical lens, and a focal length of the first transparent portion is different from a focal length of the second transparent portion.

6. The camera module according to any one of claims 1 to 5, wherein
the drive apparatus comprises a drive source and a transmission mechanism, the drive source is connected to the transmission mechanism, and the drive source is configured to drive the transmission mechanism to generate mechanism motion; and
the transmission mechanism connects the light shielding member and the front-end optical device, and the transmission mechanism is configured to transfer motion to the light shielding member and the front-end optical device.

7. The camera module according to any one of claims 1 to 5, wherein
the drive apparatus comprises a drive source and a transmission mechanism, wherein the drive source is configured to drive the front-end optical device to move, and the transmission mechanism connects the light shielding member and the front-end optical device; and
the front-end optical device is configured to transfer motion to the light shielding member through the transmission mechanism.

8. The camera module according to claim 7, wherein
the drive source comprises a voice coil motor, the voice coil motor comprises a magnet and a coil, the magnet is fastened in the camera module, and the coil is fastened to the front-end optical device.

9. The camera module according to any one of claims 6 to 8, wherein
the transmission mechanism comprises a first rack, a gear, and a second rack;
the first rack is connected to the light shielding member, and the second rack is connected to the front-end optical device; and
the gear is located between the first rack and the second rack, and is meshed with both the first rack and the second rack.

10. The camera module according to claim 9, wherein
the gear is disposed in a housing of the camera module, and is rotatably connected to the housing.

11. The camera module according to any one of claims 6 to 8, wherein
the transmission mechanism comprises two transmission wheels and a rope;
the two transmission wheels are spaced apart in the camera module; and
the rope is wound around peripheries of the two transmission wheels, the rope is fastened to the light shielding member and the front-end optical device respectively on two opposite sides in a radial direction of the transmission wheel, and the rope is configured to move relative to the two transmission wheels.

12. The camera module according to claim 11, wherein
the two transmission wheels are configured to rotate.

13. The camera module according to claim 11 or 12, wherein
the light shielding member or the front-end optical device comprises an accommodating housing, a fastening block, and a spring, both the fastening block and the spring are accommodated in the accommodating housing, the fastening block is configured to move in the accommodating housing, and two opposite ends of the spring respectively abut against an inner wall of the accommodating housing and the fastening block; and
the rope comprises two opposite ends having a gap, the two opposite ends of the rope are both located in the accommodating housing, the spring is sleeved on a periphery of one of the two opposite ends, and the fastening block is fastened to the end.

14. The camera module according to any one of claims 6 to 8, wherein
the transmission mechanism comprises an elastic member and a rotating shaft;
the rotating shaft is fastened in the camera module; and
the elastic member is rotatably connected to the rotating shaft, and connects the light shielding member and the front-end optical device; and the elastic member is configured to rotate around the rotating shaft to generate elastic deformation.

15. The camera module according to any one of claims 6 to 8, wherein
the light shielding member and the front-end optical device each are provided with a sliding pin;
the transmission mechanism comprises a connecting rod and a rotating shaft;
the rotating shaft is fastened in the camera module; and
the connecting rod is rotatably connected to the rotating shaft; the connecting rod is provided with two sliding slots, wherein one of the sliding slots forms sliding cooperation with the sliding pin of the light shielding member, and the other sliding slot forms sliding cooperation with the sliding pin of the front-end optical device; and the connecting rod is configured to rotate around the rotating shaft, and each sliding pin is configured to slide in the corresponding sliding slot.

16. The camera module according to any one of claims 1 to 15, wherein
the light shielding member comprises a first side and a second side, the first side and the second side are disposed opposite to each other, the first side is configured to receive external light, and a plurality of sawteeth whose cross-sectional shapes are triangles are disposed on the second side.

17. The camera module according to any one of claims 1 to 16, wherein
the camera module further comprises a light shielding curtain, wherein the light shielding curtain is configured to: when the light shielding member reaches the first light-taking region, block external light entering from a gap between the light shielding member and the front-end optical device.

18. The camera module according to claim 17, wherein
the light shielding curtain comprises a fastened part and a cantilever part that are connected, the fastened part is fastened to an edge of the light shielding member, a gap exists between the cantilever part and the light shielding member, the cantilever part is bent relative to the fastened part, and the cantilever part can generate elastic deformation; and
when the light shielding member reaches the first light-taking region, the light shielding curtain is located on a side that is of the light shielding member and that is close to the front-end optical device, the cantilever part is located between the light shielding member and the front-end optical device, and the cantilever part is configured to block external light entering from the gap between the light shielding member and the front-end optical device.

19. The camera module according to claim 17, wherein
the camera module further comprises a torsion spring, both the light shielding curtain and the torsion spring are disposed on an edge of the light shielding member, and the light shielding curtain is rotatably connected to the light shielding member through the torsion spring; and
when the light shielding member reaches the first light-taking region, the light shielding curtain is located between the light shielding member and the front-end optical device.

20. The camera module according to claim 17, wherein
the camera module further comprises a torsion spring;
the light shielding curtain comprises a pin shaft and a light shielding part that are connected, and the pin shaft is drivably disposed in the camera module; when the light shielding member reaches the first light-taking region, the light shielding part is located between the light shielding member and the front-end optical device, and the light shielding part is configured to block external light entering from the gap between the light shielding member and the front-end optical device; and the light shielding part is further configured to be pushed by the light shielding member and the front-end optical device during motion of the light shielding member and the front-end optical device, to rotate around the pin shaft; and
the torsion spring is mounted on the pin shaft, and the torsion spring is configured to provide elastic restoring force for the pin shaft.

21. The camera module according to any one of claims 1 to 20, wherein
the front-end optical device comprises a prism or a reflector.

22. The camera module according to any one of claims 1 to 21, wherein
the camera module is a periscope-type camera module, and the front-end optical device is configured to deflect external light to the back-end imaging device.

23. An electronic device,
comprising a transparent portion and the camera module according to any one of claims 1 to 22, wherein the camera module is located on a light exit side of the transparent portion.

24. The electronic device according to claim 23, wherein
the electronic device comprises a housing, the transparent portion is mounted on the housing, and the camera module is located in the housing.
